# EUROPEAN PATENT SPECIFICATION

(11) **EP 3 108 698 B1**
(45) Date of publication and mention of the grant of the patent: **29.11.2017**
(21) Application number: 15708392.4
(22) Date of filing: 18.02.2015
(51) Int. Cl.: H04W 48/18, H04W 84/18, H04L 29/08, H04W 88/04, H04W 88/06

(54) **MEDICAL AIR INTERFACE**
MEDIZINISCHE LUFTSCHNITTSTELLE
INTERFACE D'AIR MÉDICALE

(30) Priority: 20.02.2014 US 201414184788
(43) Date of publication of application: 28.12.2016
(73) Proprietor: Qualcomm Incorporated, San Diego, CA 92121-1714 (US)
(72) Inventor: DANTSKER, Eugene, San Diego, California 92121-1714 (US); KASARGOD, Kabir Suresh, San Diego, California 92121-1714 (US); SEZAN, Muhammed Ibrahim, San Diego, California 92121-1714 (US)
(74) Representative: Dunlop, Hugh Christopher
(86) International application number: PCT/US2015/016412
(87) International publication number: WO 2015/126964

(56) References cited:
- US-A1- 2009 058 635
- US-A1- 2012 184 207
- DIMITRIOS J VERGADOS ET AL: "NGL03-6: Applying Wireless DiffServ for QoS Provisioning in Mobile Emergency Telemedicine", GLOBAL TELECOMMUNICATIONS CONFERENCE, 2006. GLOBECOM '06. IEEE, IEEE, PI, 1 November 2006 (2006-11-01), pages 1-5, XP031075262, ISBN: 978-1-4244-0356-1
- MONIQUE CALISTI ET AL: "Enabling Adaptive Service Access Management for Next Generation Mult-Service Networks", UNIVERSAL MULTISERVICE NETWORKS, 2007. ECUMN '07. FOURTH EUROPEAN CONFERENCE ON, IEEE, PI, 1 February 2007 (2007-02-01), pages 163-172, XP031052663, ISBN: 978-0-7695-2768-0
- "Cloud-enabled wireless body area networks for pervasive healthcare", IEEE NETWORK, IEEE SERVICE CENTER, NEW YORK, NY, US, vol. 27, no. 5, 1 September 2013 (2013-09-01), pages 56-61, XP011528489, ISSN: 0890-8044, DOI: 10.1109/MNET.2013.6616116 [retrieved on 2013-09-30]

## Description

### BACKGROUND

Patients may be monitored by a host of medical devices from simple scales providing patient weight information to sophisticated electrocardiographs ("EKG") detecting life threatening arrhythmias. These devices generally digitize some aspect of the patient's physiology, converting it into data that can be transmitted to a destination through a wireless communication network. The air interface protocols used in these wireless communication networks are generally short range air interfaces (e.g., Wi-Fi®, Bluetooth®, Bluetooth Low Energy® connections) or cellular/wide area air interfaces (e.g., GSM, CDMA2000, EVDO, GRPS/EDGE, LTE, LTE Advance connections). US 2009/058635A1 relates to methods for transporting medical information over a wireless network.

While current air interfaces may enable data to be transmitted, the current air interface protocols were not developed to provide the safety and effectiveness assurances required of medical devices and systems by health regulatory authorities, such as the US Food and Drug Administration (FDA), European Commission Directorate General for Health and Consumers, etc., when handling medical data. Thus, current communication devices using current air interface protocols enable medical devices to transmit medical data wirelessly via air interfaces, but do not ensure the air interfaces used for such communications meet robustness, safety, and effectiveness requirements set by health regulatory authorities, such as the FDA or European Commission Directorate General for Health and Consumers.

### SUMMARY

It is an object of the invention to provide a method for establishing a medical data network with a classification level after receiving a medical data network trigger and for sending an indication to another connected device being not part of the medical data network, indicating not to send data while the medical data network is established according to independent claim 1. It is a further object of the invention to provide a corresponding device according to independent claim 11, a corresponding non-transitory processor readable medium according to independent claim 12 and a corresponding system according to independent claim 13. Preferred embodiments are described in the dependent claims.

### BRIEF DESCRIPTION OF THE DRAWINGS

The accompanying drawings, which are incorporated herein and constitute part of this specification, illustrate exemplary embodiments of the invention, and together with the general description given above and the detailed description given below, serve to explain the features of the invention.
FIG. 1 is a communication system block diagram of a network suitable for use with the various embodiments.
FIG. 2A is a component block diagram illustrating a wireless medical device according to an embodiment.
FIG. 2B is a component block diagram illustrating another wireless medical device according to an embodiment.
FIG. 2C is a component block diagram illustrating a mobile device according to an embodiment.
FIG. 2D is a component block diagram illustrating a base station according to an embodiment.
FIG. 3 is a system architecture diagram illustrating example protocol layer stacks that may be implemented by the devices of FIGs. 2A-2D.
FIG. 4 is a data structure diagram illustrating example fields of a medical data network classification table.
FIGs. 5A and 5B are process flow diagrams illustrating an embodiment method for originating a medical data network.
FIGs. 6A, 6B, and 6C are process flow diagrams illustrating an embodiment method for establishing a medical data network.
FIG. 7 is a process flow diagram illustrating an embodiment method for selecting a fastest air interface meeting classification level requirements.
FIGs. 8A, 8B, 8C, 8D, 8E, 8F, and 8G are communication flow diagrams illustrating example interactions between devices with medical communication abstraction layers to establish a medical data network according to an embodiment.
FIG. 9 is a process flow diagram illustrating an embodiment method for sending an indication of a medical data network and classification level to other connected devices.
FIG. 10A is a process flow diagram illustrating an embodiment method for taking a deference action associated with a medical device classification level.
FIG. 10B is a process flow diagram illustrating an embodiment method for prioritizing resources in establishing medical data networks.
FIG. 11 is a process flow diagram illustrating an embodiment method for changing a classification level of a medical data network according to an embodiment.
FIGs. 12A and 12B are communication flow diagrams illustrating example interactions between devices with medical communication abstraction layers to change a classification level of an established medical data network.
FIG. 13 is a data flow diagram of various inputs for determining whether a trigger condition exists according to an embodiment.
FIG. 14 is a component diagram of an example mobile device suitable for use with the various embodiments.

### DETAILED DESCRIPTION

The various embodiments will be described in detail with reference to the accompanying drawings. Wherever possible, the same reference numbers will be used throughout the drawings to refer to the same or like parts. References made to particular examples and implementations are for illustrative purposes, and are not intended to limit the scope of the invention or the claims.

The word "exemplary" is used herein to mean "serving as an example, instance, or illustration." Any implementation described herein as "exemplary" is not necessarily to be construed as preferred or advantageous over other implementations.

As used herein, the terms "computing device" and "mobile device" are used herein to refer to any one or all of cellular telephones, smart phones, personal or mobile multi-media players, personal data assistants (PDA's), laptop computers, tablet computers, smart books, palm-top computers, wireless electronic mail receivers, multimedia Internet enabled cellular telephones, wireless gaming controllers, and similar personal electronic devices which include a programmable processor and memory and circuitry for establishing an air interface.

As used herein, the term "medical device" is used to refer to any device which includes a programmable processor and memory and circuitry that may generate medical data.

As used herein, the term "base station" is used to refer to any one or all of a cellular tower, hot spot, access point, or similar device which includes a programmable processor and memory and circuitry for establishing an air interface and acting as a gateway between wireless devices and a wired network, such as the Internet.

Health regulatory authorities, such as the U.S. Food and Drug Administration (FDA), European Commission Directorate General for Health and Consumers, etc., set safety and effectiveness requirements for medical devices falling under their regulatory authority. As an example, the FDA classifies medical devices into three regulatory classes, Class I, Class II, and Class III, based on the safety and effectiveness of the medical device as well as the intended use of the medical device, indications of use for the medical device, and risk in use of the medical device. FDA assigned Class I medical devices generally pose the lowest level risk to patient health, Class II medical devices pose a higher level of risk, and Class III medical devices pose the highest level of risk to patient health. As another example, the European Commission Directorate General for Health and Consumers classifies medical devices into five general classes, Class I, Class I Sterile, Class I Measure, Class IIa, Class IIb, and Class III, based on the potential hazard the medical device poses to a patient taking into various factors, such as duration of contact with the body, degree of invasiveness, and local versus systemic effect. European Commission Directorate General for Health and Consumers assigned Class I, Class I Sterile, and Class I Measure medical devices generally pose the least hazard to patient health, Class II medical devices pose a higher level of risk with Class IIb medical devices posing a higher level of risk than Class IIa devices, and Class III medical devices pose the highest level of risk. While the classifications set by health regulatory authorities, such as the FDA, European Commission Directorate General for Health and Consumers, etc. define safety, effectiveness, and risk requirements, the current classifications do not set requirements for the air interfaces used to transmit medical data between devices.

The systems, methods, and devices of the various embodiments enable classification levels to be assigned to air interfaces used to transmit medical data based on a health regulatory authority assigned classification level or requirements. In an embodiment, health regulatory authorities, such as the FDA, European Commission Directorate General for Health and Consumers, etc., may assign classification levels indicating requirements that must be met by devices and air interfaces when handling medical data, particularly when handling medical data of a particular classification level. By establishing air interfaces meeting at least one unique requirement for an assigned classification level between devices transmitting and/or receiving medical data, medical data networks with the assigned classification level may be established. The classification level of a medical data network may be used to indicate the requirements the medical data network meets and ensure that the medical data passing through the medical data network is handled according to health regulatory requirements, such as FDA requirements, European Commission Directorate General for Health and Consumers requirements, Health Insurance Portability and Accountability Act (HIPAA) requirements, etc.

In an embodiment, a medical communication abstraction layer may be implemented in a processor of computing device (e.g., a smart phone, medical device and/or base station) as a software layer or module operating over the various wireless communication protocol stacks and hardware interfaces of the computing device. Executing on a processor of a computing device, the medical communication abstraction layer may interface with the host layers of the computing device, and control the various software and hardware of the computing device related to wireless communication to establish air interfaces with other devices to send and/or receive medical data and provide medical data to/from the host layer applications of the device. In an embodiment, instances of the medical communication abstraction layer may be tailored to the computing device on which they operate. The medical communication abstraction layer may execute on one or more processors of a computing device, such as one or more general purpose processor, one or more modem processor, one or more digital signal processor, etc. While generally discussed in terms of medical devices, medical communication abstraction layers may be hosted on any device in a network, thereby enabling any device to act as a node for a medical data network.

The various embodiments include computing devices and in particular the processors of such computing devices that are configured to execute the medical abstraction layer operations described herein. While the embodiments and the claims relate to processors configured to execute the operations collectively referred to herein as a medical communication abstraction layer, the processors and computing devices may be general purpose processors and computing devices that are transformed into special purpose machines by the processor-executable instructions that encompass the medical communication abstraction layer. Therefore, for ease of reference, the embodiment descriptions that follow may refer to the medical communication abstraction layer without reference to the processor or computing device executing the associated instructions as a shorthand reference to the processor/computing device executing the instructions. Therefore, such references are not intended to limit the scope of the claims to software or abstract processes.

In an embodiment, a medical communication abstraction layer executing on a computing device (or node) in a wireless network may determine the requirements associated with a classification level and establish one or more air interfaces meeting those requirements with other devices (or nodes) in the wireless network also having medical communication abstraction layers, thereby establishing a medical data network between the devices (or nodes) in the wireless network meeting the requirements for the classification level. Medical data and devices that may transmit medical data, such as medical devices, mobile devices, base stations, etc., may also be assigned classification levels, and the assigned classification level of the medical data and devices may be used by the medical communication abstraction layers to determine the medical data networks over which medical data may be transmitted.

For example, medical data and devices may be separated into three classification levels. Class III devices/medical data may be those critical to supporting life, such as EKGs and heart data, particularly when a patient is in extremis, such as during an arrhythmia. Class II devices/medical data may be those not critical to supporting life, but important to patient care, such as an intravenous (IV) pump and IV bag fluid level data. Class I devices/medical data may be those posing no immediate risk of harm to a patient, such as scale and weight data. While discussed herein as being separated into three classes, the three classes of medical data and devices are used merely as examples to better illustrate the aspects of the various embodiments, and are not intended to limit the various embodiments in any way. Other separations of medical data and devices into more or less classes may be substituted in the various examples without departing from the scope of the invention.

In an embodiment, each classification level may be associated with one or more requirements for air interfaces connecting devices in a medical data network. In an embodiment, the classification levels may be set by health regulatory authorities, such as the FDA, European Commission Directorate General for Health and Consumers, etc. and the health regulatory authorities may also set the requirements for the air interfaces for each classification level. By meeting the requirements for the air interfaces for a given classification level, the medical data network may be indicated as a medical data network with the given classification level.

In an embodiment, each classification level may be associated with unique requirements for air interfaces connecting devices in a medical data network. For example, Class I requirements may be different from Class II and Class III requirements. Examples of requirements for each classification level may include a bandwidth requirement (e.g., a minimum bandwidth), a packet redundancy requirement (e.g., a number of copies of each packet of data to transmit), a quality of service requirement (e.g., a maximum average packet loss for an interface), a latency requirement (e.g., maximum delay), a security requirement (e.g., a minimum level of encryption), a link redundancy requirement (e.g., a requirement that a number of additional links be established for an interface), and a power requirement (e.g., a minimum power level setting for radio frequency hardware used to establish an interface), which are non-limiting examples. In an embodiment, the requirements for each classification level may be graduated. For example, the air interfaces of a Class III medical data network may be assigned more resources, such as a larger bandwidth, than the air interfaces of a Class I medical data network.

In an embodiment, a medical communication abstraction layer may be triggered to establish a medical data network of a given classification level manually in response to a command from a user, such as a health care provider or patient, or automatically in response to inputs from applications on a computing device, triggers in medical data, or inputs from other devices. As an example, a health care provider may input an indication into his or her device that a Class I medical data network needs to be opened with a patient's in home weight scale (e.g., a voice command of "open a Class I network with patient X's scale"), and the medical communication abstraction layer on the healthcare provider's device may be triggered to attempt to open a Class I network with the patient's in-home weight scale. As another example, an application on a EKG, or the medical communication abstraction layer itself, may recognize based on medical data that a patient is having a heart attack, and may automatically establish a Class III medical network with an emergency dispatch operator's computer.

Medical data network triggers may include other aspects related to patient health, such as a patient preexisting condition trigger, an environmental condition trigger, a context trigger, a location trigger, and/or combinations of these and the above discussed triggers or other triggers.

Patient preexisting condition triggers may be based on information pertinent to health, wellness, fitness and the science of medicine or to the treatment of illness or injuries for a particular user of a device.

Environmental condition triggers may be based on environmental information such as air quality, temperature and humidity that may be relevant to a device user's condition and may directly impact a user's medical wellness, e.g., air quality impacting an asthma patient and air temperature impacting a patient with chronic heart disease.

Context and/or location triggers may be based on information about the context and location of the user, including information about a user's current geographical location or activity (e.g., standing up, walking, or falling).

Combination triggers may be based on combinations of two or more pieces of information, such as both environmental conditions and preexisting conditions.

In an embodiment, the medical communication abstraction layer may be enabled to determine the classification level associated with any trigger, and automatically take appropriate actions to establish air interfaces for medical data networks meeting the requirements for the determined classification level. In an embodiment, a medical communication abstraction layer may access data stored in a memory of a computing device, such as a medical data network classification table associating classification levels with their respective requirements, to determine the requirements for a classification level, and may align the resources of the device, such as the transceivers, antennas, power supplies, etc., to meet the requirements associated with a classification level and establish an air interface with another device meeting the requirements. For example, the resources of the device may be used in processing the medical data stream to meet the requirements for a determined classification level, such as encryption to a required level of security, error protection at a required level, etc., while also being used to meet the transmission requirements for the determined classification level, such as a required bandwidth, required latency, etc.

In an embodiment, once the medical communication abstraction layer determines the classification level necessary for a medical data network, the medical communication abstraction layer may determine the available air interfaces for nodes toward the end point for medical data that may be handled by the device. For example, a mobile device may determine that, based on the mobile device having dual SIM-cards and a Wi-Fi® capability, there are three air interfaces to potential nodes that may be available, one to a tower associated with the first SIM, one to a tower associated with the second SIM, and one to a Wi-Fi® hot spot.

The medical communication abstraction layer may poll the nodes via the determined air interfaces regarding their capabilities and the medical communication abstraction layers of the nodes may respond indicating the capability of each node to meet classification level requirements. For example, the medical communication abstraction layer of a tower may respond with a message indicating the classification levels the tower is capable of supporting.

In an embodiment, once the medical communication abstraction layer of the computing device determines the capabilities of any available nodes and air interfaces, the medical communication abstraction layer may select at least one node and air interface and establish an air interface meeting the requirements of the classification level between the two devices (nodes). In an embodiment, the fastest available air interfaces between devices (or nodes) in the medical data network may be selected. For example, a medical communication abstraction layer of a computing device may recognize that two air interfaces, such as a Wi-Fi® air interface and Bluetooth® air interface, are available with another device both meeting the classification level requirements but having different data rates, and may select the air interface with the higher data rate, such as the Wi-Fi® air interface, as the fastest air interface.

In another embodiment, the medical communication abstraction layer of a computing device may select more than one available air interface with one or more available nodes and establish all of the selected air interfaces meeting the requirements of the classification level between the computing device and the one or more nodes. In this manner, a medical data network may be established including more than one air interface. Medical data may be sent and received over the more than one air interface of the medical data network, such as simultaneously or redundantly, to provide air interface diversity in a medical data network and thereby increase the reliability of transmission/reception.

As an example, a medical communication abstraction layer of a computing device may establish a medical data network with another device using both a Wi-Fi® air interface and a Bluetooth® air interface with the other device. The medical communication abstraction layer may send the same data over both the Wi-Fi® air interface and the Bluetooth® air interface, either simultaneously or sequentially. Alternatively, the medical communication abstraction layer may split the packets of medical data to be transmitted over the medical data network such that some packets are sent over the Wi-Fi® air interface and some packets are sent over the Bluetooth® air interface. The other device receiving the packets over both the Wi-Fi® air interface and Bluetooth® air interface may recombine the received packets to reconstitute the medical data. By establishing any medical data network with more than one air interface, a medical communication abstraction layer may take advantage of the multiple air interfaces to provide diversity in the medical data network and/or redundancy in the medical data network to strengthen the quality of service provided in the medical data network.

As another example, a medical communication abstraction layer or a computing device may establish a medical data network including two different air interfaces. Each air interface of the medical data network may be an air interface established with a different tower, and the medical communication abstraction layer may send duplicate versions of the medical data packets to each tower via its respective air interface of the established medical data network. A network back end server may select from one or both of the series of packets received from the two towers to reconstitute the received medical data. In this manner, should one air interface of the medical data network fail, medical data may not be lost because the other air interface may still receive the medical data. Also, if one air interface of the medical data network has a higher data rate capacity than the other, the medical abstraction layer may send a portion of the data that requires a high bandwidth for transmission (e.g., images or video clips) over the air interface with the higher data rate, while sending other data (e.g., numerical data) over the other air interface of the medical data network.

In an embodiment, a medical communication abstraction layer may change the classification level of a medical data network in response to a trigger, and medical communication abstraction layers of the devices (or nodes) may align the resources of the devices (or nodes) such that the air interfaces of the medical data network meet the requirements of the new classification level. For example, initially a Class I medical data network may be established between multiple devices connected by air interfaces meeting the Class I requirements. At a later time, medical data may indicate a heart attack is occurring for a patient. In response the medical communication abstraction layers of the multiple devices in the medical data network may upgrade the air interfaces from those meeting requirements for a Class I medical data network to air interfaces meeting requirements for a Class III medical data network by aligning additional resources to the established air interfaces between the devices. In this manner, the medical communication abstraction layer may dynamically shift the resources for an air interface to meet different medical data transport requirements.

In an embodiment, a medical communication abstraction layer may be configured to give deference to medical data and network resources based on the classification level of a medical data network. For example, a medical communication abstraction layer may be configured to prioritize resources for Class III medical data networks over resources for Class I medical data networks. As another example, medical communication abstraction layers may be configured to cede network resources to other devices, for example by holding data for transmission, when other devices have established a Class III medical data network.

In an embodiment, a medical communication abstraction layer may be configured to prioritize establishment of medical data networks based on classification levels associated with those medical data networks. For example, a medical communication abstraction layer of a cellular tower may look across the population of devices currently requesting establishment of medical data networks, and prioritize resources and establish the medical data networks based on relative classification levels of each of the devices. When the cellular tower receives more than one request to establish a medical data network and the cellular tower's resources do not support establishing all requested medical data networks, a request to establish a Class III medical data network from one device may be honored (i.e., a Class III medical data network will be established) while a request to establish a Class I medical data channel from another device may be rejected. Similarly, when a request to establish a Class III medical data network is received from a device and the cellular tower lacks sufficient resources to establish another Class III medical data network because of previously established medical data networks, the medical communication abstraction layer of the cellular tower may drop or terminate lower classification level medical data networks (e.g., Class I and Class II medical data networks) to free up sufficient resources to establish the requested Class III medical data network. In this manner, the establishment of medical data networks based upon the priority of the request may be controlled at a telecommunications network operator level across a population based on actions taken by the medical communication abstraction layer of the cellular tower. In an embodiment, when requests have the same classification level, the medical abstraction layer may establish the medical data networks on a first come first serve basis until resources are exhausted. In an embodiment, when one or more node of an established medical data network may become unavailable (e.g., fails) or may be needed to support another higher classification medical data network, the established medical data network may be rerouted to other available nodes to maintain the established medical data network.

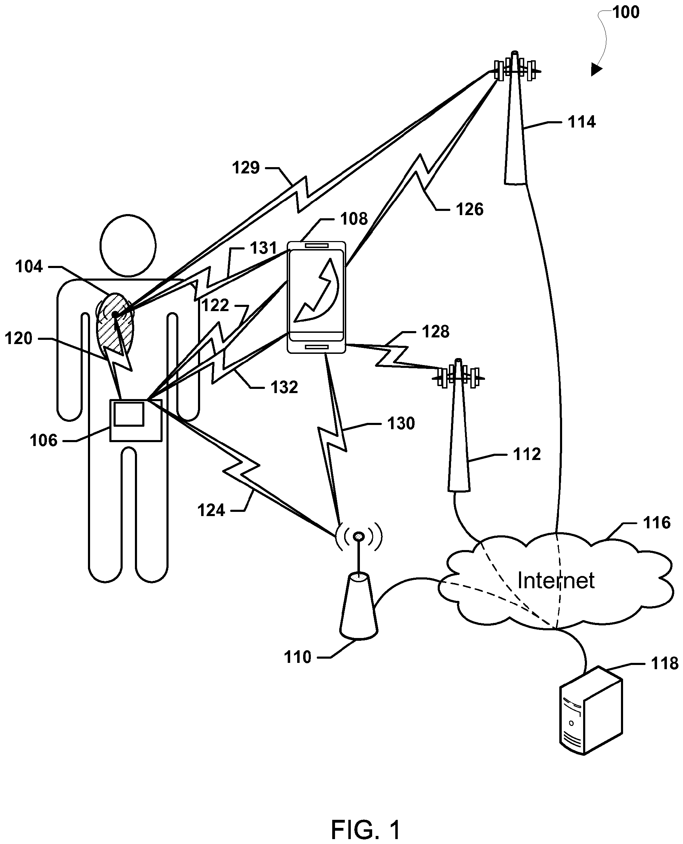

FIG. 1 illustrates a wireless network system 100 suitable for use with the various embodiments. The wireless network system 100 may include multiple medical devices, such as a medical sensor patch 104 and a medical analyzer 106 (e.g., an EKG machine, smart watch, heart rate monitor, activity monitoring band, etc. that may gather and/or analyze medical data) a mobile device, such as a smart phone 108, and base stations, such as cellular tower 114, cellular tower 112, and hot spot 110, and one or more medical provider computer 118 connected to the Internet 116. The cellular tower 114, cellular tower 112, and hot spot 110 may be in communication with routers which may connect to the Internet 116. In this manner, via the connections to the Internet 116 the cellular tower 114, cellular tower 112, and hot spot 110 may act as gateways between wireless devices connected to the cellular tower 114, cellular tower 112, or hot spot 110 via air interfaces and the Internet 116 and connected medical provider computer 118.

Medical sensor patch 104 may be a device including one or more sensors worn by or attached to a user or patient. As examples, the medical sensor patch 104 may be an adhesive patch, a wearable arm band, a wrist watch, a necklace, an article of clothing, or any other type of device including one or more sensors worn by or attached to a user or patient. Additionally, a patient or user is illustrated in FIG. 1 associated with only one medical sensor patch 104, multiple medical sensor patches, with the same or different sensors, may be worn by or attached to a user or patient at any given time. The medical sensor patch 104 may gather, integrate, process, and/or analyze measurements from its different sensors to generate medical data. Different sensors in the medical sensor patch 104 may include various types, e.g., electrical, optical, physical, activity, and chemical sensors, measuring physiological or biological signals of the user or patient. The medical sensor patch 104 may exchange data with the medical analyzer 106 via an air interface 120, such as a short range air interface (e.g., a Bluetooth® or Bluetooth Low Energy (LE)® connection) established between the medical sensor patch 104 and the medical analyzer 106. The medical sensor patch 104 may exchange data with the smart phone 108 via an air interface 131 (e.g., a Bluetooth® or Bluetooth Low Energy (LE)® connection, Wi-Fi® connection, etc.) established between the medical sensor patch 104 and the smart phone 108. The medical sensor patch 104 may exchange data with a base station, such as cellular tower 114, via an air interface 129 (e.g., a GSM, CDMA2000, EVDO, GRPS/EDGE, LTE, or LTE Advance connection) established between the medical sensor patch 104 and the base station.

The medical analyzer 106 may exchange data with the hot spot 110 via an air interface 124 (e.g., a Wi-Fi® connection) established between the hot spot 110 and medical analyzer 106. The medical analyzer 106 may exchange data with the smart phone 108 via an air interface 122 (e.g., a Wi-Fi® connection) established between the smart phone 108 and medical analyzer 106 or via a different air interface 132 (e.g., a Bluetooth® connection) established between the smart phone 108 and medical analyzer 106. Additionally, while not illustrated in FIG. 1, the medical analyzer 106 may also exchange data with a base station, such as cellular towers 112 or 114, via an air interface (e.g., a GSM, CDMA2000, EVDO, GRPS/EDGE, LTE, or LTE Advance connection) established between the medical analyzer 106 and the base station.

The smart phone 108 may exchange data with the cellular tower 114 via an air interface 126 (e.g., a GSM, CDMA2000, EVDO, GRPS/EDGE, LTE, or LTE Advance connection) established between the smart phone 108 and cellular tower 114. The smart phone 108 may exchange data with the cellular tower 112 via an air interface 128 (e.g., a GSM, CDMA2000, EVDO, GRPS/EDGE, LTE, or LTE Advance connection) established between the smart phone 108 and cellular tower 112. The smart phone 108 may exchange data with the hot spot 110 via an air interface 124 (e.g., a Wi-Fi® connection) established between the smart phone 108 and hot spot 110.

In an embodiment, each of the medical sensor patch 104, the medical analyzer 106, the smart phone 108, the hot spot 110, the cellular tower 112, and the cellular tower 114 may include instances of a medical communication abstraction layer operating on a processor of the respective devices 104, 106, 108, 110, 112, and 114. The medical communication abstraction layer of each device 104, 106, 108, 110, 112, and 114 may control the resources of that device to establish the respective air interfaces 120, 122, 124, 126, 128, 129, 130, 131, and 132 to meet the requirements for a classification associated with medical data to be exchanged over the air interfaces 120, 122, 124, 126, 128, 129, 130, 131, and 132 thereby establishing medical data networks meeting the classification requirements.

For example, the medical communication abstraction layer of the medical sensor patch 104 and the medical communication abstraction layer of the medical analyzer 106 may control the respective resources of the medical sensor patch 104 and the medical analyzer 106 such that the air interface 120 meets Class II requirements for an air interface. The medical communication abstraction layer of the medical analyzer 106 and the medical communication abstraction layer of the smart phone 108 may also control the respective resources of the medical analyzer 106 and the smart phone 106 such that the air interface 122 meets Class II requirements for an air interface. The medical communication abstraction layer of the smart phone 108 and the medical communication abstraction layer of the cellular tower 114 may control the respective resources of the smart phone 108 and the cellular tower 114 such that the air interface 126 meets Class II requirements for an air interface. In this manner, because the air interfaces 126, 122, and 120 meet the Class II requirements for air interfaces, a Class II medical data network between the cellular tower 114, the smart phone 108, the medical analyzer 106, and medical sensor patch 104 may be established. The cellular tower 114, the smart phone 108, the medical analyzer 106, and medical sensor patch 104 may be nodes of the Class II medical data network, with the medical sensor patch 104 that gathers medical data being an originating node and the cellular tower 114 that provides medical data to the Internet 116 being an end node of the Class II medical data network. Once established the Class II medical data network may be used to exchange Class II medical data between the devices 104, 106, 108, and 114, the Internet 116, and the medical provider computer 118.

As another example, the medical communication abstraction layer of the medical sensor patch 104 and the medical communication abstraction layer of the smart phone 108 may control the respective resources of the medical sensor patch 104 and the smart phone 106 to ensure that the air interface 131 meets Class III requirements for an air interface. The medical communication abstraction layer of the smart phone 108 and the medical communication abstraction layer of the cellular tower 114 may control the respective resources of the smart phone 108 and the cellular tower 112 to ensure that the air interface 128 meets Class III requirements for an air interface. In this manner, because the air interfaces 131 and 128 meet the Class III requirements for air interfaces, a Class III medical data network between the cellular tower 112, the smart phone 108, and medical sensor patch 104 may be established. The cellular tower 112, the smart phone 108, and medical sensor patch 104 may be nodes of the Class III medical data network, with the medical sensor patch 104 that gathers medical data being an originating node and the cellular tower 112 that provides medical data to the Internet 116 being an end node of the Class III medical data network. Once established, the Class III medical data network may be used to exchange Class III medical data between the devices 104, 108, and 112, the Internet 116, and the medical provider computer 118.

As a further example, the medical communication abstraction layer of the medical sensor patch 104 and the medical communication abstraction layer of the tower 114 may control the respective resources of the medical sensor patch 104 and the cellular tower 114 to ensure that the air interface 129 meets Class I requirements for an air interface. In this manner, because the air interface 129 meets the Class I requirements for air interfaces, a Class I medical data network between the cellular tower 114 and the smart phone 108 may be established. The cellular tower 114 and medical sensor patch 104 may be nodes of the Class I medical data network, with the medical sensor patch 104 that gathers medical data being an originating node and the cellular tower 114 that provides medical data to the Internet 116 being an end node of the Class I medical data network. Once established, the Class I medical data network may be used to exchange Class I medical data between the devices 104 and 114, the Internet 116, and the medical provider computer 118.

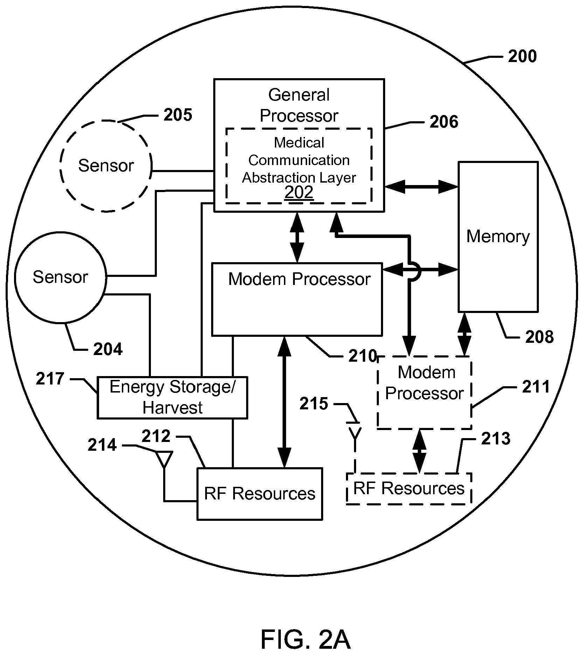

FIG. 2A is a component block diagram illustrating a wireless on-patient sensing device 200, such as a medical sensor patch according to an embodiment. The wireless on-patient sensing device 200 may include one or more controllers, such as a general purpose processor 206, which may be coupled to at least one sensor 204, such as an EKG lead, temperature sensor, etc. and optionally additional sensors 205, such as activity sensors, chemical sensors, air quality sensors, etc. The sensors 204 and 205 may be the same type of sensors (e.g., both EKG leads) or different types of sensors (e.g., a temperature sensor and a blood glucose sensor). The sensors 204 and 205 may monitor some aspect of a patient's physiology and output data to the general purpose processor 206. The general purpose processor 206 may be configured with processor-executable instructions to execute the medical communication abstraction layer 202. The general purpose processor 206 may also be coupled to at least one memory 208. Memory 208 may be a non-transitory processor-readable medium storing processor-executable instructions and other data, including data related to air interface and medical data classification level requirements. The memory 208 may also store the medical communication abstraction layer 202.

The memory 208 and general purpose processor 206 may each be coupled to at least one modem processor 210, which may be coupled to various RF resources 212 including one or more amplifiers, radios, power sources, etc. Optionally, the memory 208 and general purpose processor 206 may be coupled to one or more additional modem processors 211, which may be coupled to various RF resources 213 including one or more amplifiers, radios, power sources, etc. The RF resources 212 and 213 may be coupled to antennas 214 and 215, respectively. Together the modem processor 210, the RF resources 212, and antenna 214 may comprise an RF resource chain that may perform transmit/receive functions for the wireless on-patient sensing device 200. As examples, the RF resource chain may be a Bluetooth®, Wi-Fi®, or cellular/wide area resource chain enabling the wireless on-patient sensing device 200 to establish air interfaces using Bluetooth®, Wi-Fi®, or cellular/wide area connections to other devices. The modem processor 211, the RF resources 213, and antenna 215 may include another RF resource chain that may perform transmit/receive functions for the wireless on-patient sensing device 200. The RF resource chains of the wireless on-patient sensing device may be the same type of RF resource chains (e.g., both short range (e.g., Bluetooth®) resource chains) or different types of resource chains (e.g., one Wi-Fi® resource chain and one 3G resource chain). In an embodiment, the general purpose processor 206 may be configured with processor-executable instructions to perform the operations of the embodiment methods of the medical communication abstraction layer 202 and may control resources of the wireless on-patient sensing device 200, including any RF resource chains to establish air interfaces and medical data networks meeting classification level requirements. In an embodiment, the wireless on-patient sensing device 200 may include one or more energy storage/harvesting system 217, such as a battery or solar cell, to output electrical energy for use by connected hardware, such as the general purpose processor 206, modem processor 210, RF resources 212, and sensor 204, or any other hardware included in the wireless on-patient sensing device 200.

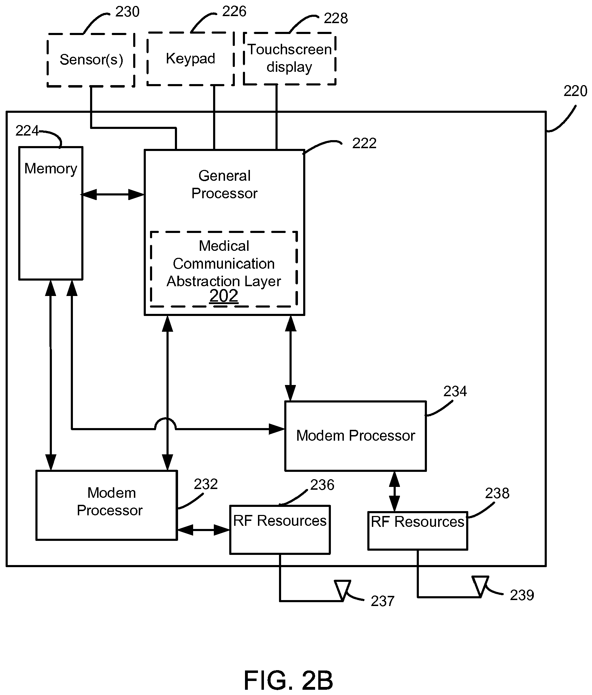

FIG. 2B is a component block diagram illustrating a wireless patient monitoring device (or medical analyzer) 220, such as an EKG, smart watch, fitness band, etc., according to an embodiment. The wireless patient monitoring device 220 may include one or more controller, such as a general purpose processor 222, which may be coupled to one or more optional sensors 230, such as an EKG lead, weight scale, thermometer, etc., an optional keypad 226, and an optional touchscreen display 228. The sensor(s) 230 may monitor some aspect of a patient's physiology and output data to the general purpose processor 222. The keypad 226 and touchscreen display 228 may receive inputs from a user of the wireless patient monitoring device 220 and output indications of the inputs to the general purpose processor 222. The general purpose processor 222 may also be coupled to at least one memory 224. Memory 224 may be a non-transitory processor-readable medium storing processor-executable instructions and other data, including data related to air interface and medical data classification level requirements. The memory 224 may also store the medical communication abstraction layer 202.

The memory 224 and general purpose processor 222 may each be coupled to two different modem processors 232 and 234. The modem processors 232 and 234 may be coupled to various RF resources 236 including one or more amplifiers, radios, power sources, etc. The RF resources 236 may be coupled to an antenna 237. Together the modem processor 232, the RF resources 236, and antenna 237 may comprise a first RF resource chain that may perform transmit/receive functions for the wireless patient monitoring device 220. For example, the first RF resource chain may be a Bluetooth® resource chain enabling the wireless patient monitoring device 220 to establish air interfaces using Bluetooth® connections to other devices, such as the wireless on-patient sensing device 200 described above, to transmit/receive medical data. The modem processor 234 may be coupled to various RF resources 238 including one or more amplifiers, radios, power sources, etc. The RF resources 238 may be coupled to an antenna 239. Together the modem processor 234, the RF resources 238, and antenna 239 may comprise a second RF resource chain that may perform transmit/receive functions for the wireless patient monitoring device 220 different from the first RF resource chain. For example, the second RF resource chain may be a Wi-Fi® resource chain enabling the wireless patient monitoring device 220 to establish air interfaces using Wi-Fi® connections to other devices to transmit/receive medical data. In an embodiment, the medical communication abstraction layer 202 may execute on the general purpose processor 222 (i.e., the general purpose processor 222 may be configured with processor-executable instructions to perform the operations of the embodiment methods of the medical communication abstraction layer 202) and may control resources of the wireless patient monitoring device 220, including the first and second RF resource chains to establish air interfaces and medical data networks meeting classification level requirements.

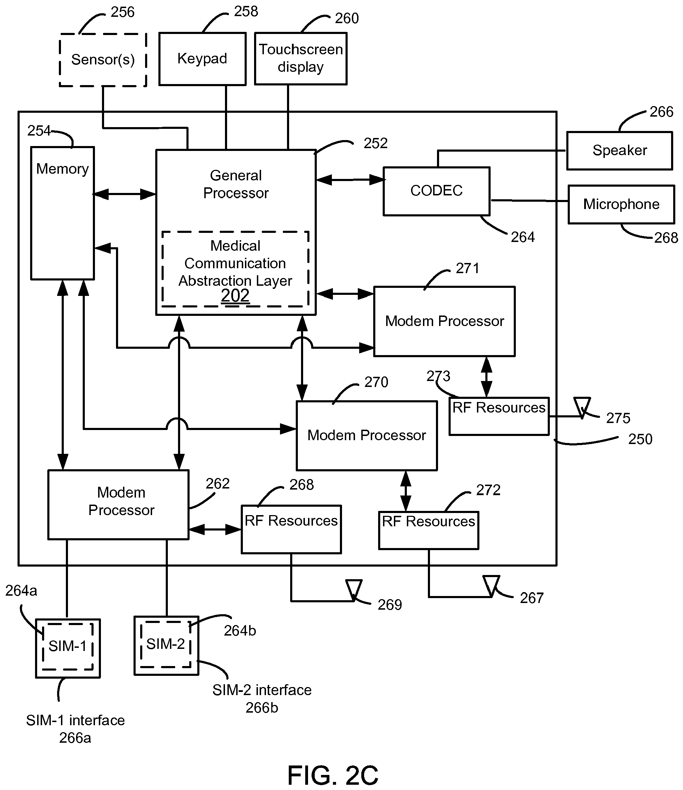

FIG. 2C is a component block diagram illustrating a mobile device 250, such as a smart phone, according to an embodiment. The mobile device 250 may include one or more controller, such as a general purpose processor 252, which may be coupled to one or more optional sensors 256, such as a pulse monitor, weight scale, thermometer, pedometer etc., a keypad 258, and a touchscreen display 260. The sensor(s) 256 may monitor some aspect of a patient's physiology and output data to the general purpose processor 252. The keypad 258 and touchscreen display 260 may receive inputs from a user of the mobile device 250 and output indications of the inputs to the general purpose processor 252. The general purpose processor 252 may also be coupled to at least one memory 254. Memory 254 may be a non-transitory processor-readable medium storing processor-executable instructions and other data, including data related to air interface and medical data classification level requirements. The memory 254 may also store the medical communication abstraction layer 202.

The mobile device 250 may include a coder/decoder (CODEC) 264 coupled to the general purpose processor 252. The CODEC 264 may in turn be coupled to a speaker 266 and a microphone 268.

The memory 254 and general purpose processor 252 may each be coupled to two or more different modem processors 270 and 271. The modem processor 270 may be coupled to various RF resources 272 including one or more amplifiers, radios, power sources, etc. The RF resources 272 may be coupled to an antenna 267. Together the modem processor 270, the RF resources 272, and antenna 267 may comprises a first RF resource chain that may perform transmit/receive functions for the mobile device 250. For example, the first RF resource chain may be a Bluetooth® resource chain enabling the mobile device to establish air interfaces using Bluetooth® connections to other devices, such as the wireless patient monitoring device 220 described above, to transmit/receive medical data. The modem processor 271 may be coupled to various RF resources 273 including one or more amplifiers, radios, power sources, etc. The RF resources 273 may be coupled to an antenna 275. Together the modem processor 271, the RF resources 273, and antenna 275 may comprise a second RF resource chain that may perform transmit/receive functions for the mobile device 250 different from the first RF resource chain. For example, the second RF resource chain may be a Wi-Fi® resource chain enabling the wireless patient monitoring device 220 to establish air interfaces using Wi-Fi® connections to other devices, such as a Wi-Fi® hot spot, to transmit/receive medical data.

In an embodiment, the mobile device 250 may be a multi-SIM device and may include multiple SIM interfaces 266a and 266b which may each receive its own identity module SIM-1 264a and SIM-2 264b each associated with a different cellular subscription. Each SIM may have a CPU, ROM, RAM, EEPROM, and I/O circuits and may include information identifying a subscriber device to a network. The general purpose processor 252 and memory 254 may be coupled to at least one modem processor 262, such as a baseband modem processor, that may be coupled to the SIM interfaces 266a and 266b as well as the RF resources 268 including one or more amplifiers, radios, power sources, etc., connected to the antenna 269. Together the modem processor 262, RF resources 268, and antenna 269 may comprise a third RF resource chain that may perform transmit/receive functions for the mobile device 250 different from the first and second RF resource chain. While illustrated as multiple SIMs sharing a single RF resource chain, in another embodiment each SIM-1 264a and SIM-2 264b may have its own separate resource chain. In an embodiment, the medical communication abstraction layer 202 may execute on the general purpose processor 252 (i.e., the general purpose processor 252 may be configured with processor-executable instructions to perform the operations of the embodiment methods of the medical communication abstraction layer 202) and may control resources of the mobile device, including the first, second and third RF resource chains to establish air interfaces and medical data networks meeting classification level requirements.

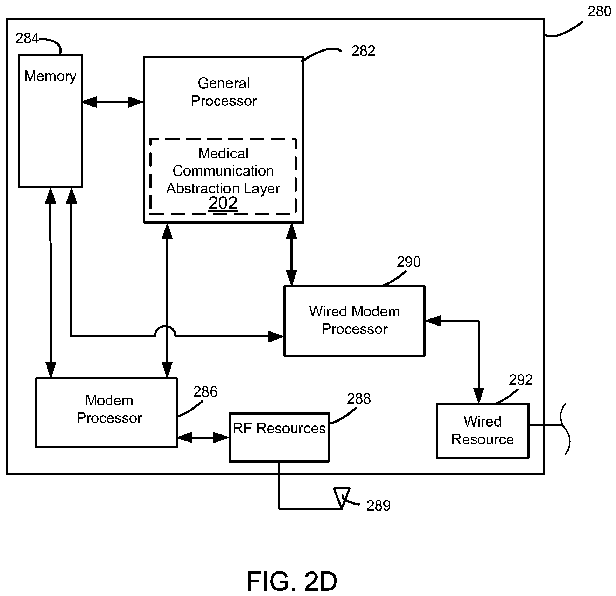

FIG. 2D is a component block diagram illustrating a base station 280, such as a cellular tower or hot spot, according to an embodiment. The base station 280 may include one or more controller, such as a general purpose processor 282, which may be coupled to at least one memory 284. Memory 284 may be a non-transitory processor readable medium storing processor-executable instructions and other data including data related to air interface and medical data classification level requirements. The memory 284 may also store the medical communication abstraction layer 202.

The memory 284 and general purpose processor 282 may each be coupled to at least one modem processor 286, such as a short range modem processor or baseband modem processor, that may be coupled to the RF resources 288 including one or more amplifiers, radios, power sources, etc., connected to the antenna 289. Together the modem processor 286, RF resources 288, and antenna 289 may comprise an RF resource chain that may perform transmit/receive functions for the base station. The memory 284 and general purpose processor 282 may also be coupled to at least one wired modem processor 290 coupled to a wired resource 292 connected to a wired network, such as the Internet. In an embodiment, the medical communication abstraction layer 202 may run on the general purpose processor 282 and may control resources of the base station 280, including the RF resource chain to establish air interfaces and medical data networks meeting classification level requirements.

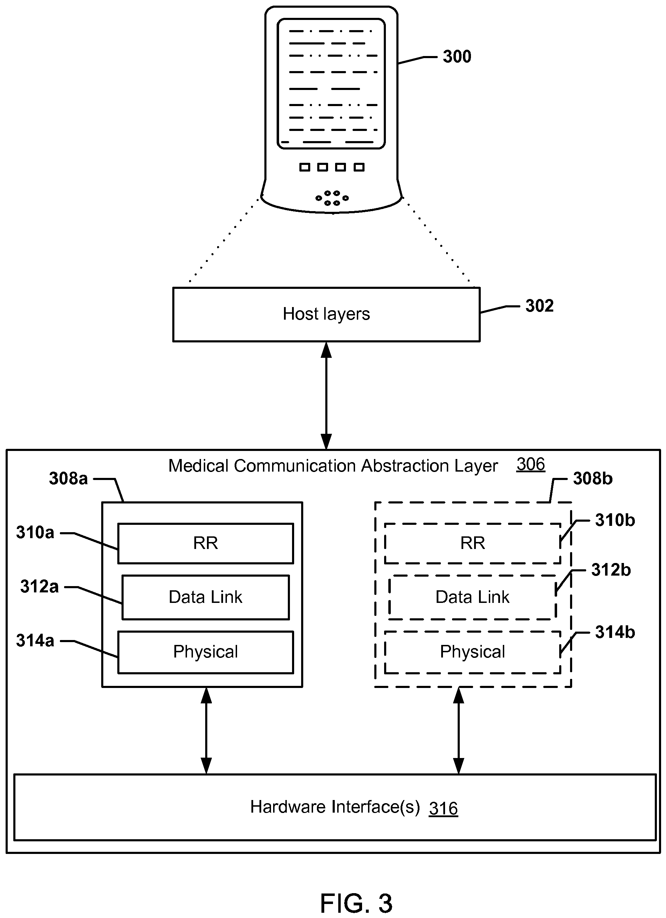

FIG. 3 illustrates a layered software architecture of a computing device 300, such as a medical device, mobile device, base station, etc., having a medical communication abstraction layer 306 configured to establish air interfaces and medical data networks meeting classification level requirements. The software architecture may be distributed among one or more processors, such as general purpose processors and/or modem processors. The medical communication abstraction layer 306 may include functions and protocols to control the various modem stacks and radio resources used to establish air interfaces. For example, a computing device 300 may include at least one protocol stack 308a associated with its first RF resource chain and optional additional protocol stacks 308b associated with any additional RF resource chains.

Each resource stack 308a and 308b may include various layers, such as radio resource (RR) management layers 310a and 310b to oversee link establishment, data link layers 312a and 312b to handle and analyze incoming/outgoing data, and physical layers 314a and 314b to establish connections of the air interface and manage network resources. The medical communication abstraction layer 306 may operate above the protocol stacks 308a and 308b to control the operations of the protocol stacks 308a and 308b and the hardware interfaces 316 (e.g., one or more RF transceivers). The software architecture of a computing device 300 may also include at least one host layer 302 to provide data transfer services between the medical communication abstraction layer 306 and other applications on the computing device 300.

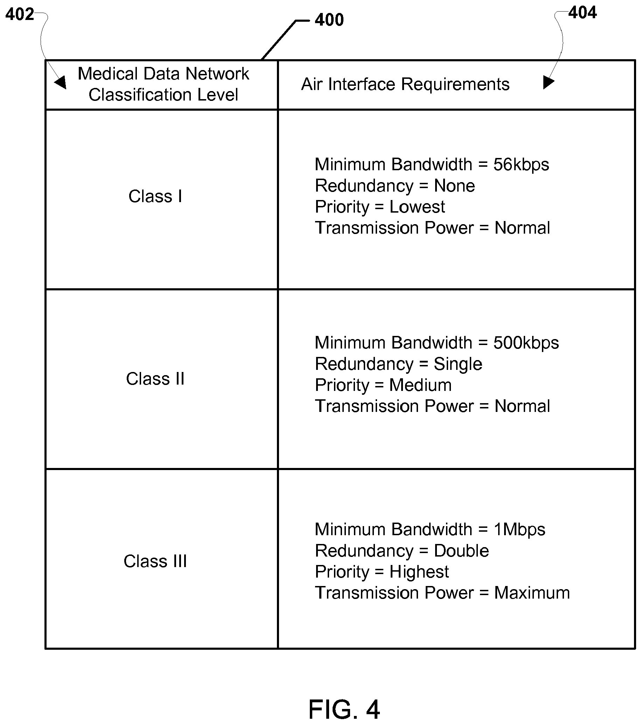

FIG. 4 is a data structure diagram illustrating example fields of a medical data network classification table 400 that may be stored in a memory of a computing device and used by a medical communication abstraction layer to determine requirements for an air interface for a given classification level. In an embodiment the medical data network classification table 400 may correlate medical data network classification levels 402 with air interface requirements 404. In this manner, once a medical communication abstraction layer establishes a needed classification level 402 for a medical data network, the medical communication abstraction layer may ensure that any air interface to be used for that medical data network meets the requirements 404 correlated with that classification level 402. Classification level requirements 404 may be any type of requirements, including one or more of a bandwidth requirement, a packet redundancy requirement, a quality of service requirement, a latency requirement, a security requirement, , and/or any other type of requirement related to telecommunications devices and/or air interfaces.

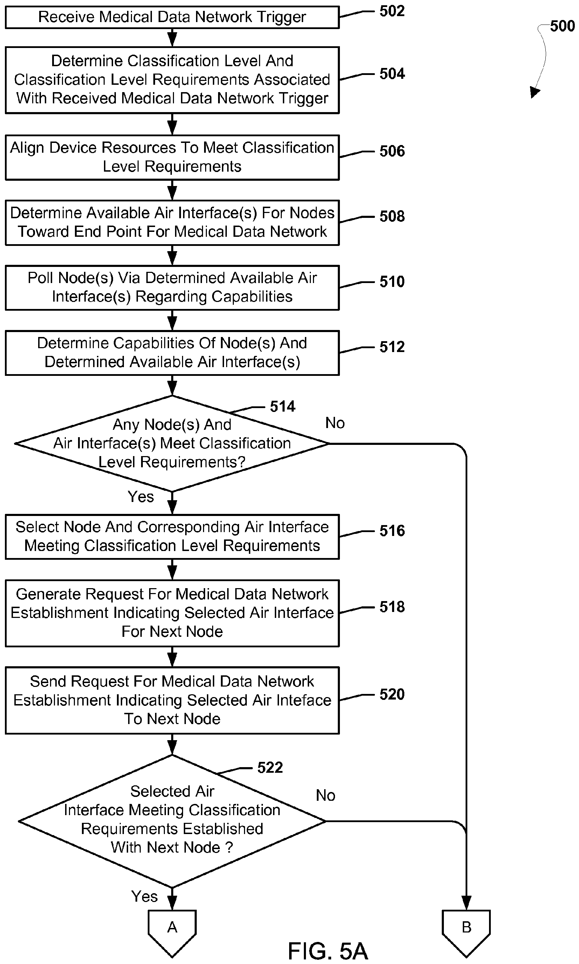

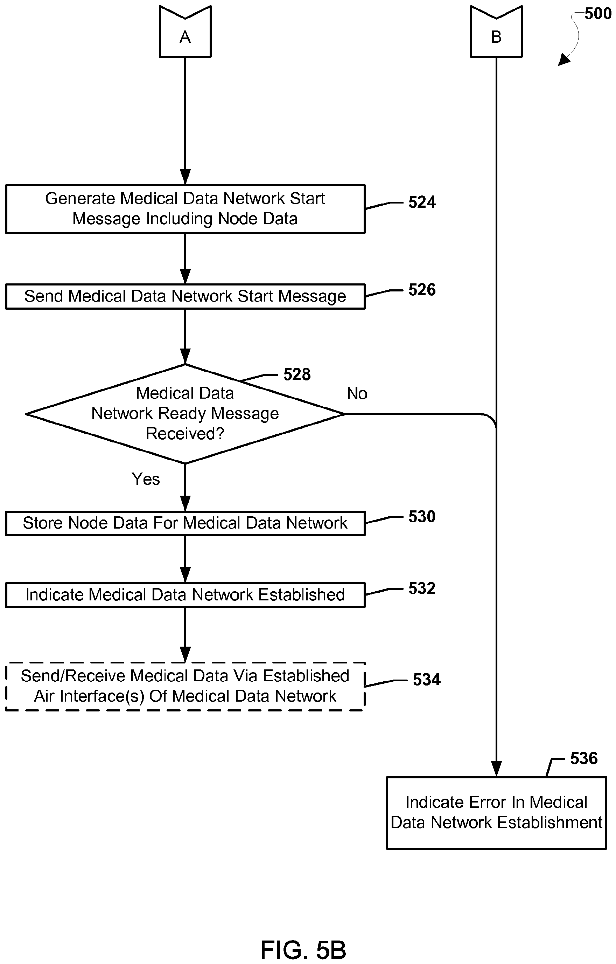

FIGs. 5A and 5B illustrate an embodiment method 500 for originating a medical data network. In an embodiment, the operations of method 500 may be performed by a medical communication abstraction layer (e.g., medical communication abstraction layer 306 of FIG. 3) operating on a processor of a computing device, such as a medical device or smart phone collecting medical data for transmission via an air interface.

In block 502 (FIG. 5A) the medical communication abstraction layer may receive a medical data network trigger. In an embodiment, a medical data network trigger may be an indication that a user of the device, such as a patient or healthcare provider, has requested a medical data network be established. For example, the medical data network trigger may be an indication of a selection on a touch screen to transmit medical data or an indication of a voice command to "Open a medical data network." In another embodiment, a medical data network trigger may be an indication, such as an automatically generated indication, received from an application running on the computing device that a medical data network should be established. In an embodiment, a medical data network trigger may include an indication of the classification level associated with the medical data network and an end point for the medical data of the medical data network, such as a health care provider computer IP address.

In block 504 the medical communication abstraction layer may determine a classification level and classification level requirements associated with the received medical data network trigger. In an embodiment, a medical data network trigger may include an indication of the required classification for the medical data network to be opened. In another embodiment, the medical communication abstraction layer may identify a classification associated with the type of application sending the medical data network trigger. For example, a medical data network trigger from a heart monitoring application may always be assigned the same classification level. In an embodiment, based on the classification level the medical communication abstraction layer may determine the classification level requirements. For example, the medical communication abstraction layer (e.g.,. medical communication abstraction layer 306 of FIG. 3) may compare the determined classification level to a medical data network classification table in memory correlating classification levels and requirements to determine the classification level requirements.

In block 506 the medical communication abstraction layer may align device resources to meet the determined classification requirements. For example, the medical communication abstraction layer may control resources, such as antennas, transceivers, power sources, amplifiers, etc., in the various RF resource chains enable the air interfaces meeting the minimum requirements for the determined classification level to be established with other devices.

In block 508 the medical communication abstraction layer may determine the available air interfaces for nodes toward the end point for the medical data network. In an embodiment, the medical communication abstraction layer may identify any wireless devices that have been previously discovered that may be upstream of the medical communication abstraction layer towards a connection to a wired network (e.g. the Internet) and the potential air interfaces that may be used to connect to those discovered wireless devices. For example, the medical communication abstraction layer may be running on a wearable medical device, such as a pulse monitor, wrist watch, smart watch, etc., and may determine a smart phone is available via a Bluetooth® air interface and a Wi-Fi® hot spot is available via a Wi-Fi® air interface.

In block 510 the medical communication abstraction layer may poll the nodes via the determined air interfaces regarding the capabilities of the nodes. For example, the medical communication abstraction layer may send a polling request message over the various air interfaces and the devices may respond with a message indicating the devices include a medical communication abstraction layer and the classification levels their various air interfaces may meet. In this manner, the polled devices or nodes may indicate both their capability and availability to meet the current need of the medical communication abstraction layer to establish a given medical data network.

In block 512 the medical communication abstraction layer may determine the capabilities of the nodes and determined air interfaces. In an embodiment, the medical communication abstraction layer may determine the capabilities of the nodes and available air interfaces based on the responses to the polling.

In determination block 514 the medical communication abstraction layer may determine whether any nodes and air interfaces meet the classification level requirements. In response to determining that no nodes and available air interfaces meet the classification level requirements (i.e., determination block 514 = "No"), in block 536 (FIG. 5B) the medical communication abstraction layer may indicate an error in medical data network establishment.

In response to determining that at least one node and its corresponding air interface meet the classification level requirements (i.e., determination block 514 = "Yes"), the medical communication abstraction layer may select a node and corresponding air interface meeting the classification level requirements in block 516 (FIG. 5A).

In block 518 the medical communication abstraction layer may generate a request for medical data network establishment indicating the selected air interface for the next node. In an embodiment, the medical data network establishment request may indicate the classification required for the medical data network as well as other data, such as the end point for the medical data to be transmitted over the medical data network.

In block 520 the medical communication abstraction layer may send the request for the medical data network establishment indicating the selected air interface to the next node.

In determination block 522 the medical communication abstraction layer may determine whether the selected air interface meeting the classification requirements has been established with the next node. In response to determining that the selected air interface meeting the classification requirements is not established (i.e., determination block 522 = "No"), in block 536 (FIG. 5B) the medical communication abstraction layer may indicate an error in medical data network establishment.

In response to determining that the selected air interface meeting the classification requirements is established (i.e., determination block 522 = "Yes"), the medical communication abstraction layer may generate a medical data network start message including its node data in block 524 (FIG. 5B). In an embodiment, the node data may include an identifier, such as a MAC ID, of the device.

In block 526 the medical communication abstraction layer may send the medical data network start message to the next node in the medical data network via the air interface connecting the computing device to the next node.

In determination block 528 the medical communication abstraction layer may determine whether a medical data network ready message is received. In an embodiment, a medical data network ready message may be a message including node data, such as identifiers, for all nodes in a medical data network. In response to determining that the medical data network ready message is not received (i.e., determination block 528 = "No"), the medical communication abstraction layer may indicate an error in medical data network establishment in block 536 (FIG. 5B).

In response to determining that the medical data network ready message is received (i.e., determination block 528 = "Yes"), the medical communication abstraction layer may store node data for the medical data network in a memory in block 530. In block 532 the medical communication abstraction layer may indicate the medical data network is established. In optional block 534 the medical communication abstraction layer may send/receive medical data via the established air interfaces of the medical data network.

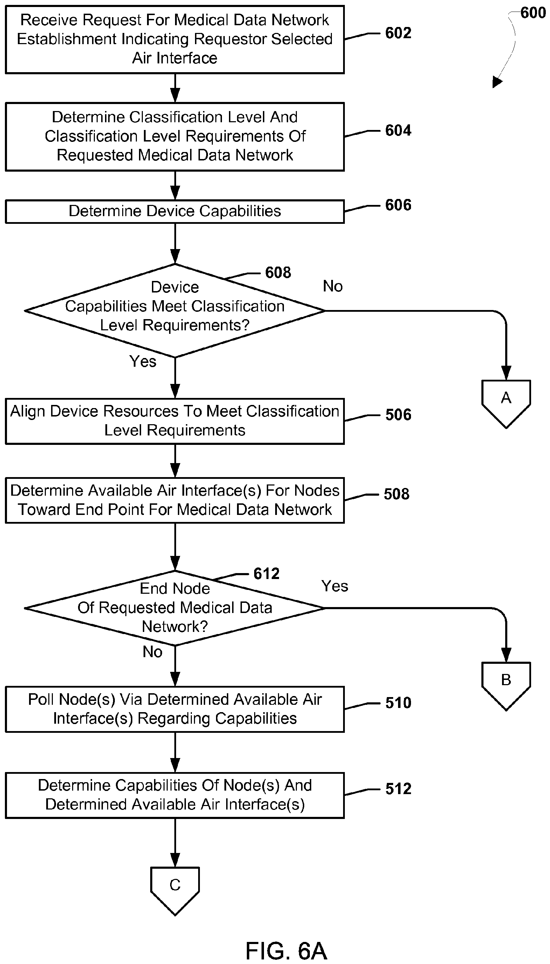

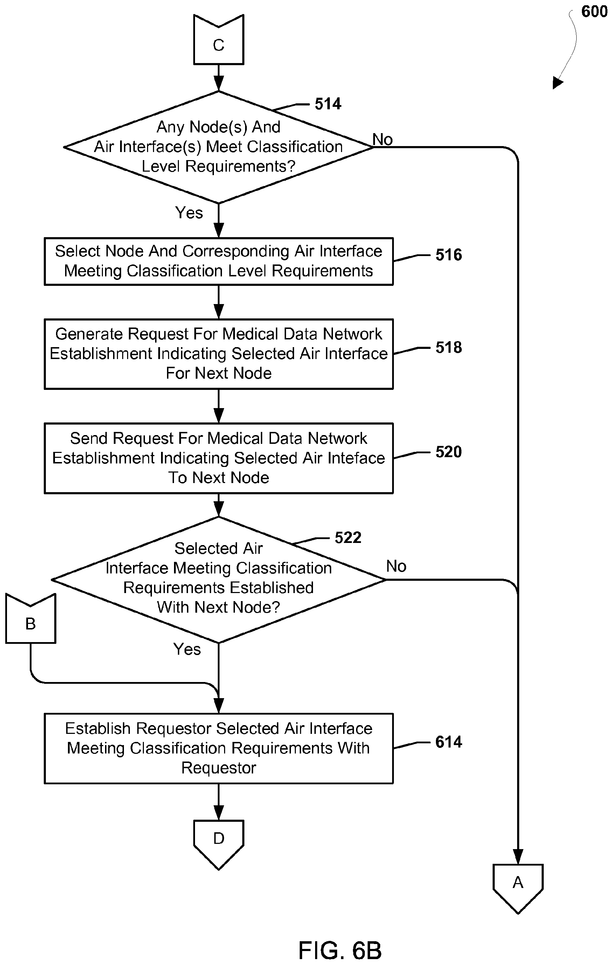

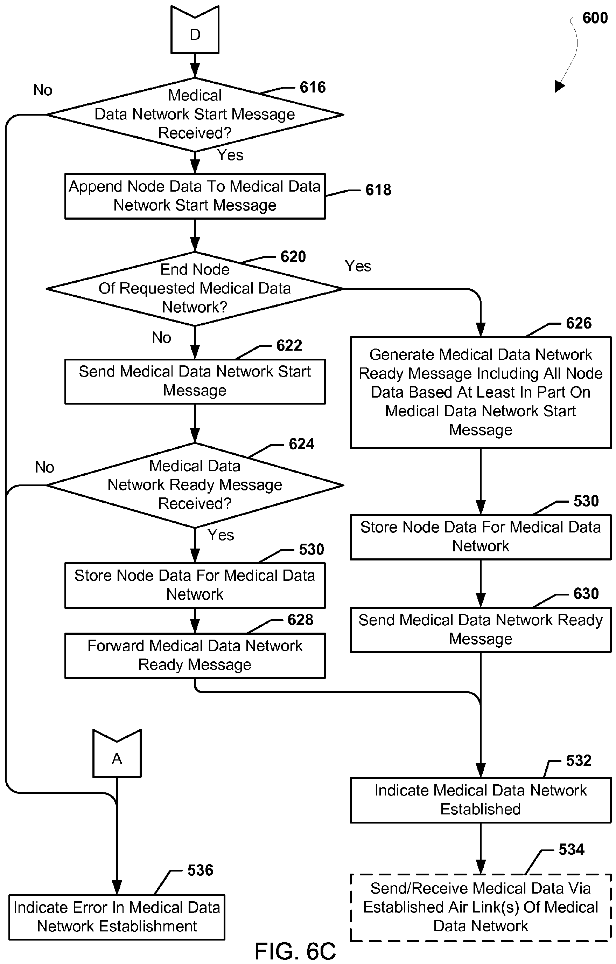

FIGs. 6A, 6B, and 6C illustrate an embodiment method 600 for establishing a medical data network. In an embodiment, the operations of method 600 may be performed by a medical communication abstraction layer operating on a processor of a computing device, such as a medical device, mobile device, or base station transmitting/receiving medical data via an air interface. In block 602 (FIG. 6A) the medical communication abstraction layer may receive a request for medical data network establishment indicating a requester-selected air interface. In an embodiment, a request for medical data network establishment may be a message sent from the medical communication abstraction layer of one device to the medical communication abstraction layer of another device indicating a desire to open a medical data network, the classification of the desired medical data network, and a selected air interface to use between the two devices for the medical data network.

In block 604 the medical communication abstraction layer may determine the classification level and classification level requirements of the requested medical data network. For example, the medical communication abstraction layer may determine the classification level from the request message and compare the determined classification level to a medical data network classification table in memory correlating classification levels and requirements to determine the classification level requirements.

In block 606 the medical communication abstraction layer may determine the computing device capabilities. In an embodiment, the medical communication abstraction layer may determine the computing device capabilities related to the requirements for the different classification levels. For example, the medical communication abstraction layer may determine current available bandwidth, radio resource loading, battery level, quality of service, etc.

In determination block 608 the medical communication abstraction layer may determine whether the computing device capabilities meet the classification level requirements. In response to determining that the computing device capabilities do not meet the classification level requirements (i.e., determination block 608 = "No"), the medical communication abstraction layer may indicate an error in medical data network establishment in block 536 (FIG. 6C).

In response to determining that the computing device capabilities do meet the classification level requirements (i.e., determination block 608 = "Yes"), the medical communication abstraction layer may align the computing device resources to meet the classification level requirements as discussed above in block 506 (FIG. 6A), and in block 508 the medical communication abstraction layer may determine available air interfaces for nodes toward end points for the medical data network as discussed above.

In determination block 612 the medical communication abstraction layer may determine whether the computing device is an end node of a requested medical data network. For example, the medical communication abstraction layer may determine whether the computing device is a base station acting as a gateway between a wireless network and a wired network, such as the Internet. In response to determining that the computing device is not an end node (i.e., determination block 612 = "No"), the medical communication abstraction layer may perform operations in blocks 510, 512, 514, 516, 518, 520, and 522 of like numbered blocks of method 500 as described above.

In response to determining that the selected air interface meeting the classification requirements is established with the next node (i.e., determination block 522 = "Yes"), or in response to determining that the computing device is an end node (i.e., determination block 612 = "Yes"), the medical communication abstraction layer may establish the requestor selected air interface meeting the classification requirements with the requestor in block 614 (FIG. 6B).

In determination block 616 (FIG. 6C) the medical communication abstraction layer may determine whether a medical data network start message is received. In response to determining that a medical data network start message is not received (i.e., determination block 616 = "No") the medical communication abstraction layer may indicate an error in medical data network establishment in block 536.

In response to determining that a medical data network start message is received (i.e., determination block 616 = "Yes"), the medical communication abstraction layer may append its node data to the medical data network start message in block 618. For example, the medical communication abstraction layer may add the computing device identifier, such as the MAC ID, for the computing device to the medical data network start message.

In determination block 620 the medical communication abstraction layer may determine whether the computing device is an end node of a requested medical data network. For example, the medical communication abstraction layer may determine whether the computing device is a base station acting as a gateway between a wireless network and a wired network, such as the Internet. In response to determining that the computing device is an end node (i.e., determination block 620 = "Yes"), the medical communication abstraction layer may generate a medical data network ready message including all node data based at least in part on the medical data network start message in block 626. For example, the medical communication abstraction layer may generate a message including the identifiers of all nodes in the medical data network. As discussed above, in block 530 the medical communication abstraction layer may store the node data for the medical data network and in block 630 the medical communication abstraction layer may send the medical data network ready message.

In response to determining that the computing device is not an end node (i.e., determination block 620 = "No"), the medical communication abstraction layer may send the medical data network start message to the next node in block 622. In determination block 624 the medical communication abstraction layer may determine whether a medical data network message is received. In response to determining that a medical data network ready message is not received (i.e., determination block 624 = "No"), the medical communication abstraction layer may indicate an error in medical data network establishment in block 536.

In response to determining that a medical data network ready message is received (i.e., determination block 624 = "Yes"), the medical communication abstraction layer may store the node data for the medical data network in block 530 as discussed above. In block 628 the medical communication abstraction layer may forward the medical data network ready message. As discussed above, in block 532 the medical communication abstraction layer may indicate the medical data network is established, and in optional block 534 the medical communication abstraction layer may send/receive medical data via the established air link(s) of the medical data network.

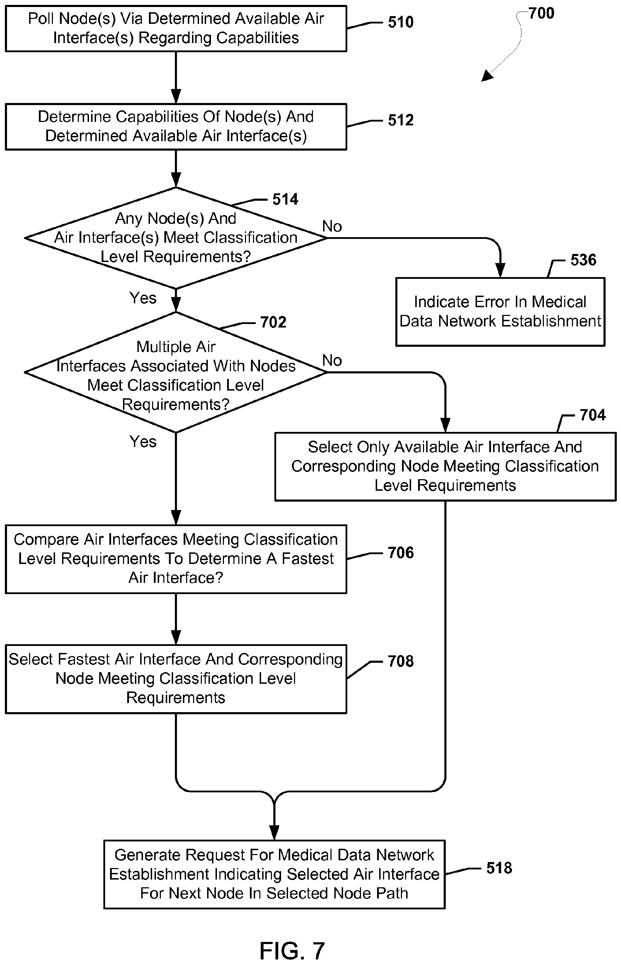

FIG. 7 illustrates an embodiment method 700 for selecting a fastest air interface meeting classification level requirements, such as an air interface with a highest data rate and/or shortest latency meeting classification level requirements. In an embodiment, the operations of method 700 may be performed by a medical communication abstraction layer operating on a processor of a computing device, such as a medical device, mobile device, or base station transmitting/receiving medical data via an air interface. In an embodiment, the operations of method 700 may be performed in conjunction with the operations of methods 500 or 600 described above. In block 510, 512, 514, and 536 the medical communication abstraction layer may perform operations of like numbered blocks of method 500 as described above.

In block 702 the medical communication abstraction layer may determine whether multiple air interfaces associated with nodes meet the classification level requirements. In response to determining that multiple air interfaces do not meet the classification level requirements (i.e., determination block 702 = "No"), the medical communication abstraction layer may select the only available air interface and corresponding node meeting the classification level requirements in block 704.

In response to determining that multiple air interfaces meet the classification level requirements (i.e., determination block 702 = "Yes"), the medical communication abstraction layer may compare the air interfaces meeting the classification level requirements to determine a fastest air interface in block 706. In an embodiment, a fastest air interface may be the air interface capable of realizing the data transfer rate. For example the fastest air interface may be the air interface with a highest data rate and/or shortest latency meeting classification level requirements. In block 708 the medical communication abstraction layer may select the fastest air interface and corresponding node meeting the classification level requirements. As discussed above, in block 518 the medical communication abstraction layer may generate a request for medical data network establishment indicating the selected air interface for the next node in the selected node path.

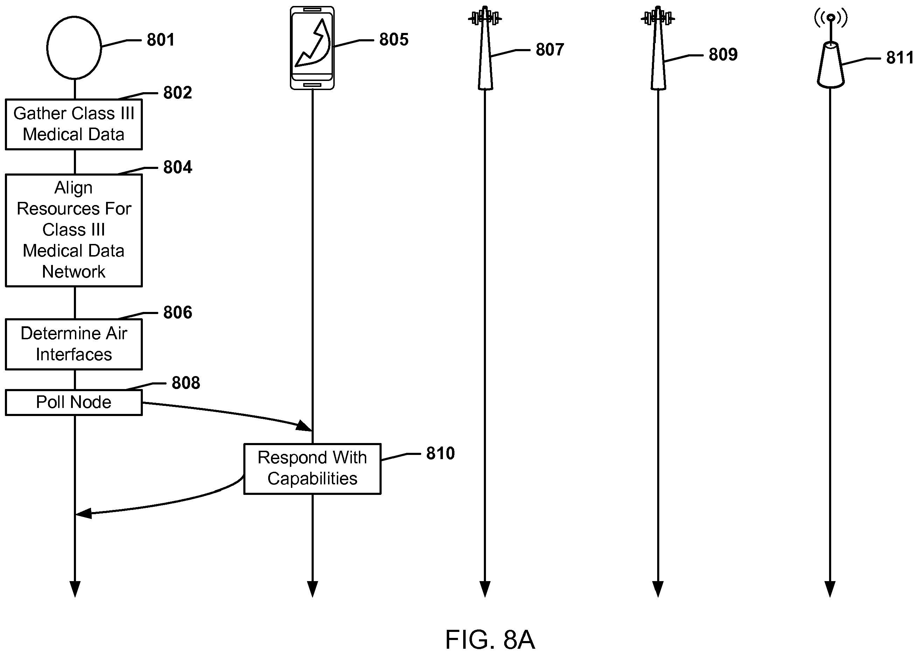

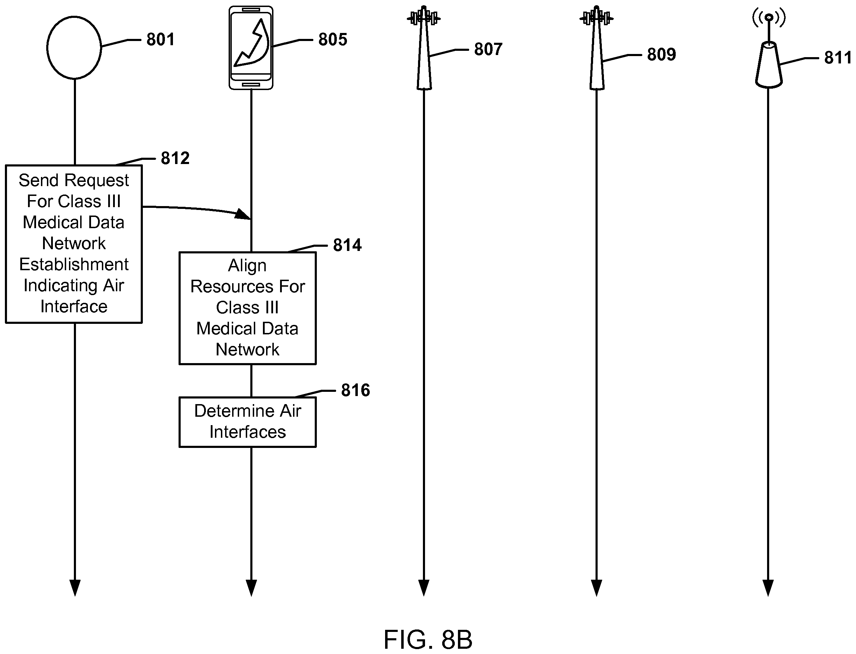

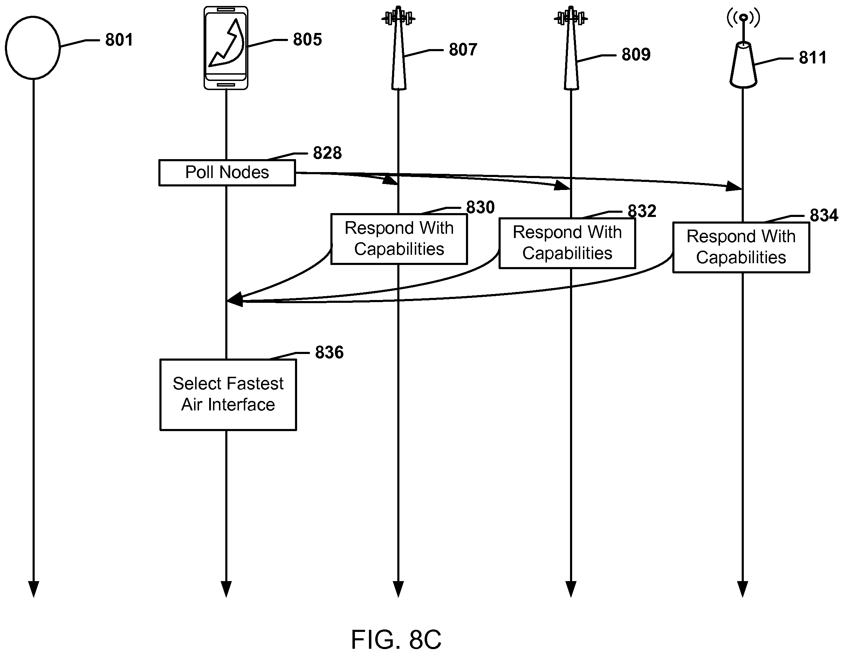

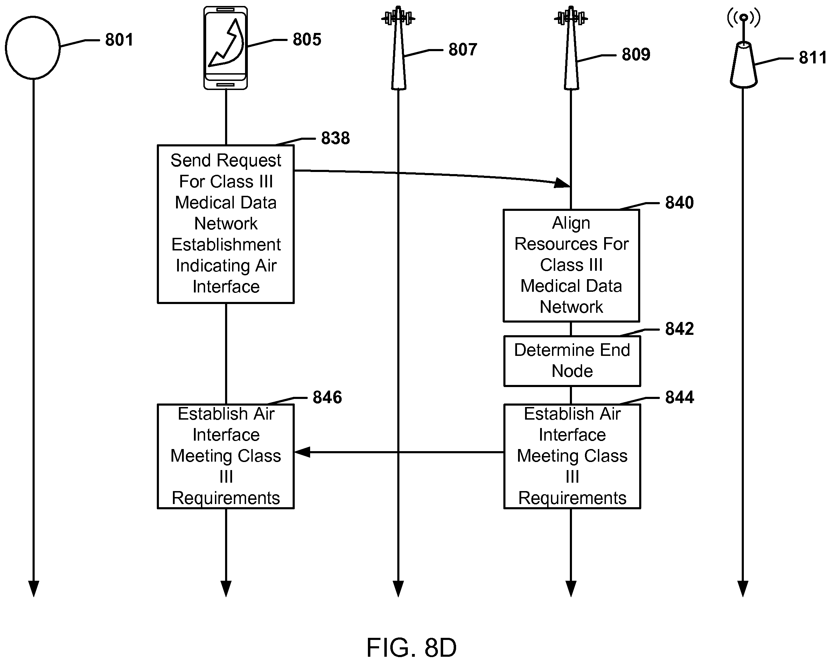

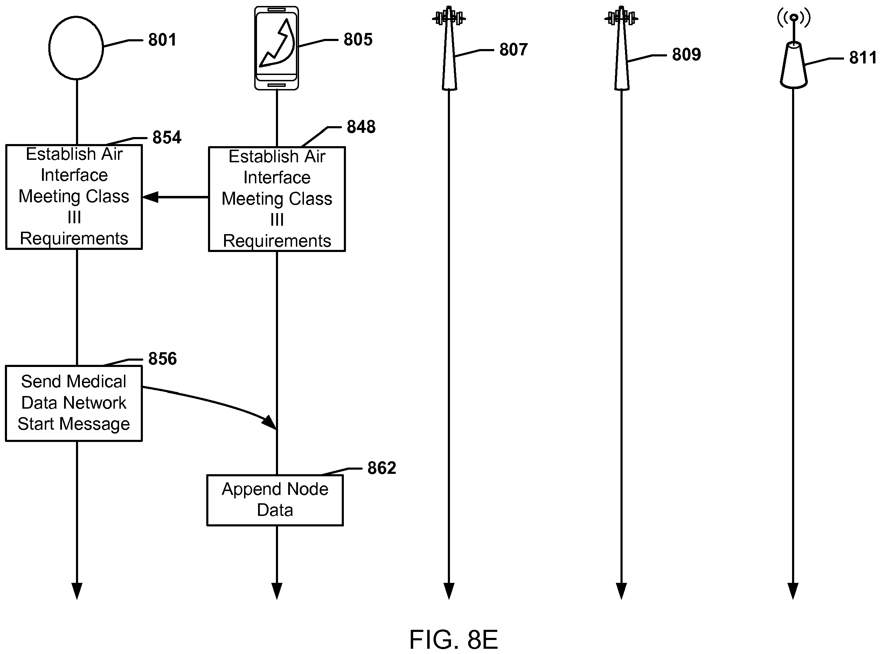

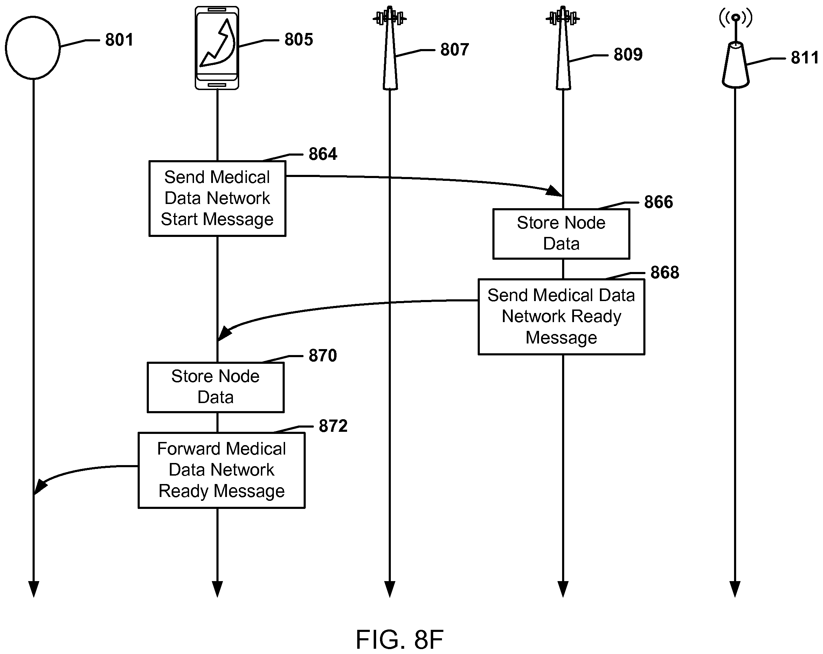

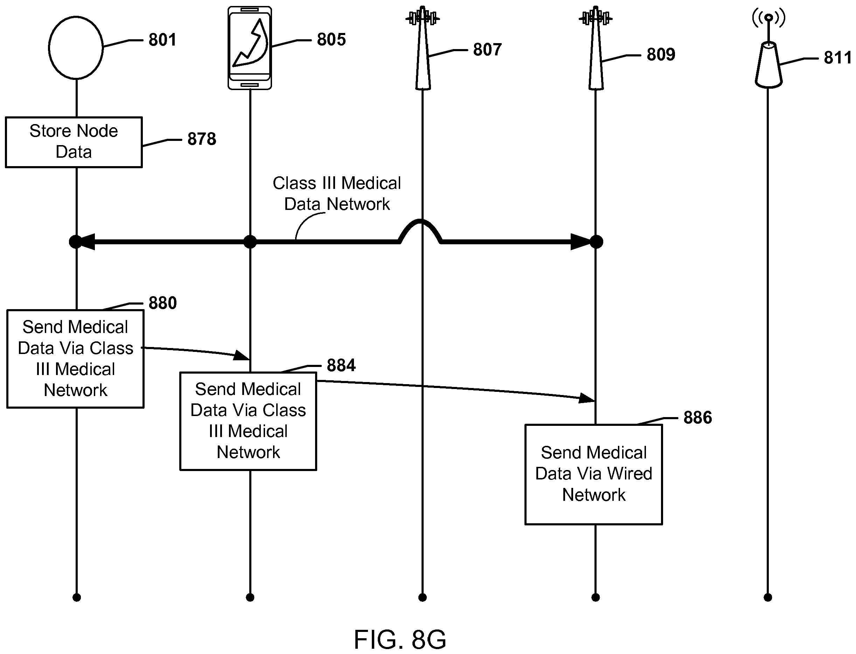

FIGs. 8A, 8B, 8C, 8D, 8E, 8F, and 8G are communication flow diagrams illustrating example interactions between an EKG patch 801 (e.g., a patch including two or more electrodes configured to detect and measure the electrical impulses of the heart based on voltage changes sensed between two electrodes and output indications of the measurements of the electrical impulses), smart phone 805, cellular tower 807, cellular tower 809, and hot spot 811 all having medical communication abstraction layers to establish a medical data network according to an embodiment. In block 802 (FIG. 8A) the EKG patch 801 may gather Class III medical data, such as heart rhythm data. In block 804 the medical communication abstraction layer of the EKG patch 801 may align device resources for establishing a Class III medical data network. In block 806 the medical communication abstraction layer of the EKG patch 801 may determine the available air interfaces and may determine that a Bluetooth® connection to the smart phone 805 is available. In block 808 the medical communication abstraction layer of the EKG patch 801 may poll the next node, i.e., the smart phone 805 regarding its capabilities and in block 810 the medical communication abstraction layer of the smart phone 805 may respond with its capabilities.

In block 812 (FIG. 8B) the medical communication abstraction layer of the EKG patch 801 may send a request for a Class III medical data network establishment indicating the Bluetooth® air interface to the smart phone 805. Upon receiving the request, in block 814 the medical communication abstraction layer of the smart phone 814 may align the resources of the smart phone 805 for a Class III medical data network.

In block 816 the medical communication abstraction layer of the smart phone 805 may determine the available air interfaces and identify that a Wi-Fi® connection to the hot spot 811 is available, a cellular connection for a first subscription (e.g., a GSM, CDMA2000, EVDO, GRPS/EDGE, LTE, or LTE Advance connection) is available with a cellular tower 807, and a cellular connection for a second subscription (e.g., a GSM, CDMA2000, EVDO, GRPS/EDGE, LTE, or LTE Advance connection) is available with a cellular tower 809. In block 828 (FIG. 8C) the smart phone 806 may poll the possible next nodes, the hot spot 811, and towers 807 and 809. In blocks 830, 832, and 834 the hot spot 811, and towers 807 and 809 may respond with their respective capabilities.

In block 836 the smart phone 805 may select the fastest air interface, such as the second subscription cellular air interface to cellular tower 809. In block 838 (FIG. 8D) the medical communication abstraction layer of the smart phone 805 may send a request for a Class III medical data network establishment indicating the second subscription cellular air interface to the tower 809. Upon receiving the request, the medical communication abstraction layer of the tower 809 may align the resources of the tower 809 for a Class III medical data network in block 840. In block 842 the cellular tower 809 may determine that it is an end node, and in blocks 844 and 846 the cellular tower 809 and smart phone 805 may establish a cellular air interface meeting Class III requirements with one another. In blocks 848 and 854 (FIG. 8E) the smart phone 805 and the EKG patch 801 may establish a Bluetooth® air interface meeting Class III requirements with one another.

In block 856 the EKG patch 801 may send a medical data network start message to the smart phone 805 including the node data of the EKG patch 801. In block 862 the smart phone 805 may append its node data to the medical data network start message and in block 864 (FIG. 8F) send the medical data network start message to the cellular tower 809. In block 866 the cellular tower 809 may store the node data, and in block 866 the cellular tower may send the medical data network ready message including node data for the cellular tower 809, smart phone 805, and EKG patch 801 to the smart phone 805. In block 870 the smart phone 805 may store the node data and in block 872 forward the medical data network ready message including node data for the cellular tower 809, smart phone 805, and EKG patch 801 to the EKG patch 801. In block 878 (FIG. 8G) the EKG patch 801 may store the node data and the Class III medical data network having nodes at the EKG patch 801, smart phone 805, and cellular tower 809 may be established.

In block 880 the EKG patch 801 may send medical data to the smart phone 805 via the established Class III medical network, in block 884 the smart phone 805 may send the medical data to the cellular tower 809 via the established Class III medical network, and in block 886 the cellular tower 809 may send the medical data via a wired network, such as the Internet.

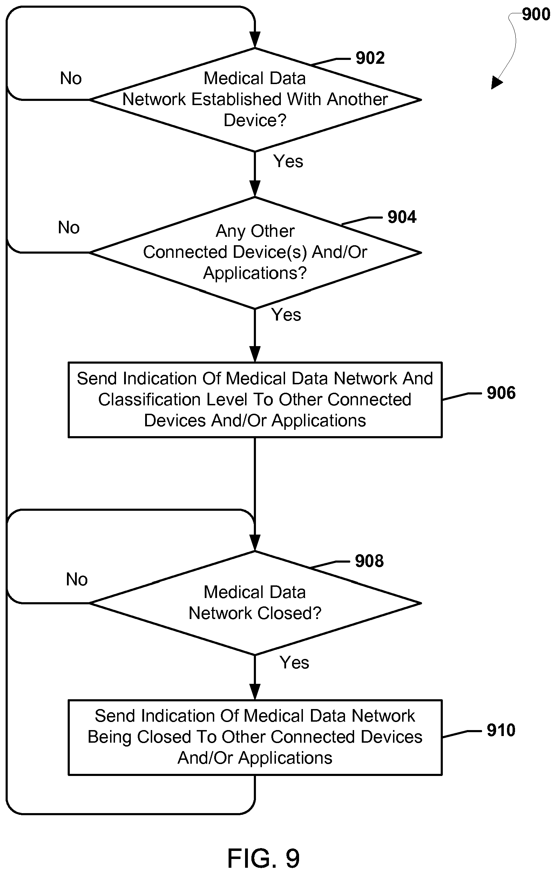

FIG. 9 illustrates an embodiment method 900 for sending an indication of a medical data network and classification level to other connected devices. In an embodiment, the operations of method 900 may be performed by a medical communication abstraction layer operating on a processor of a computing device, such as a medical device, mobile device, or base station transmitting/receiving medical data via an air interface. In determination block 902 the medical communication abstraction layer may determine whether a medical data network is established with another device. In response to determining that a medical data network is not established with another device (i.e., determination block 902 = "No"), the medical communication abstraction layer may continue to determine whether a medical data network is established with another device.

In response to determining that a medical data network is established with another device (i.e., determination block 902 = "Yes"), the medical communication abstraction layer may determine whether there are any other connected devices and/or applications in determination block 904. For example, the medical communication abstraction layer may determine whether any other devices are connected via air interfaces not part of the medical data network. As another example, the medical communication abstraction layer may determine whether any applications may be running on the computing device that may attempt to establish a connection through an RF chain associated with the medical data network, such as a phone call dialing application or medical data application. In response to determining that there are no other connected devices and/or applications (i.e., determination block 904 = "No"), the method 900 may proceed to determination block 902 to determine whether another medical data network is established.

In response to determining that there are other connected devices and/or applications (i.e., determination block 904 = "Yes"), the medical communication abstraction layer may send an indication of the medical data network and its classification level to the other connected devices and/or applications in block 906. In this manner, the medical communication abstraction layer may make the other devices and/or applications aware of the establishment of a medical data network that the other devices and/or applications may not be part of.

In determination block 908 the medical communication abstraction layer may determine whether the medical data network is closed. In response to determining that the medical data network is not closed (i.e., determination block 908 = "No"), the medical communication abstraction layer may continue to determine whether the medical data network is closed in determination block 908. In response to determining that the medical data network is closed (i.e., determination block 908 = "Yes"), the medical communication abstraction layer may send an indication that the medical data network is closed to the other connected devices and/or applications in block 910 and the method 900 may proceed to determination block 902 to determine whether another medical data network is established.

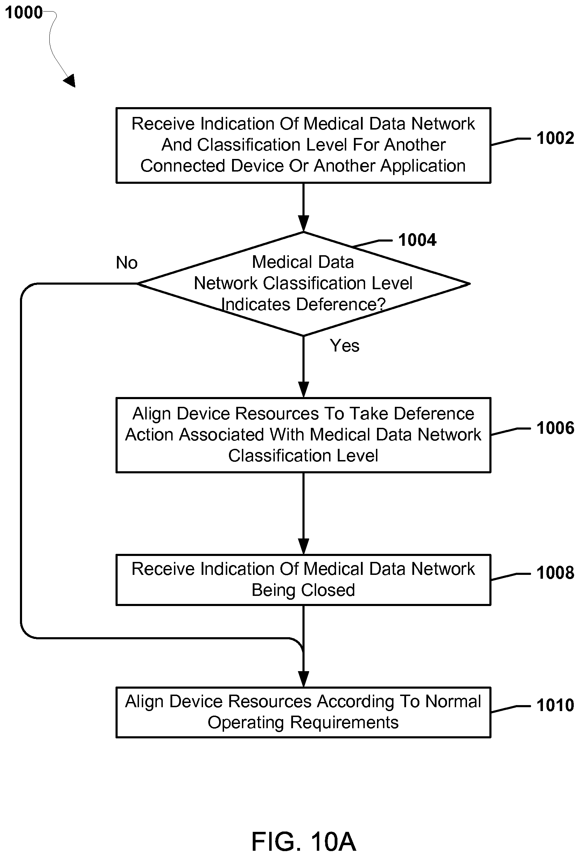

FIG. 10A illustrates an embodiment method 1000 for taking a deference action associated with a medical device classification level. In an embodiment, the operations of method 1000 may be performed by a medical communication abstraction layer operating on a processor of a computing device, such as a medical device, mobile device, or base station transmitting/receiving medical data via an air interface. In block 1002 the medical communication abstraction layer may receive an indication of a medical data network and classification level for another connected device or another application.

In determination block 1004 the medical communication abstraction layer may determine whether the medical data network classification level indicates deference is required. In an embodiment, the medical communication abstraction layer may be configured to give deference to higher classified medical data networks over lower classified medical data networks. The classification level of one medical data network being higher than another medical data network may indicate deference is required to the higher classified medical data network. For example, an indication that a Class III medical data network was established by another device or application may indicate to a medical communication abstraction layer of a computing device with only Class I medical data networks established that the computing device with only Class I medical data networks should give deference to the Class III medical data network. As another example, an indication of a Class I medical data network established by another device or application received by the medical communication abstraction layer of the computing device that only currently has Class I medical data networks established may indicate no deference is required because the classification levels are equal. In response to determining that deference is not indicated (i.e., determination block 1004 = "No"), the medical communication abstraction layer may align the computing device resources according to its normal operating requirements for its various air interfaces and medical data networks in block 1010.

In response to determining that deference is indicated (i.e., determination block 1004 = "Yes"), in block 1006 the medical communication abstraction layer may align the computing device resources to take a deference action associated with the medical device classification level. As examples, deference actions may include stopping transmission of data, reducing bandwidth usage, reducing power levels, increasing transmission periodicity, tearing down established links, etc. In this manner, by taking a deference action devices that are not part of a medical data network may free up network and/or device resources for use by the devices that are part of a medical data network. In block 1008 the medical communication abstraction layer may receive an indication of the medical data network being closed, and in block 1010 the medical communication abstraction layer may align the computing device resources according to its normal operating requirements for its various air interfaces and medical data networks.

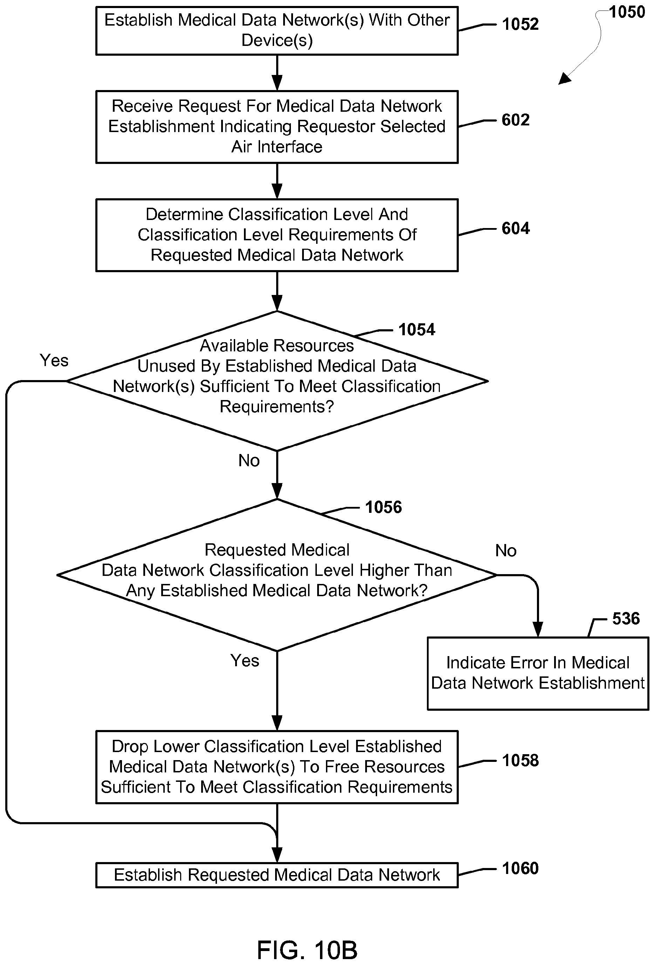

FIG. 10B illustrates an embodiment method 1050 for prioritizing resources in establishing medical data networks. In an embodiment, the operations of method 1050 may be performed by a medical communication abstraction layer operating on a processor of a computing device, such as a medical device, mobile device, or base station transmitting/receiving medical data via an air interface. In an embodiment, the operations of method 1050 may be performed in conjunction with the operations of method 600 and/or 700 described above.

In block 1052 the medical communication abstraction layer may establish one or more data networks with one or more other devices, such as a population of different smart phones operated by different users. As discussed above, in block 602 the medical communication abstraction layer may receive a request for medical data network establishment indicating a selected air interface, and in block 604 the medical communication abstraction layer may determine the classification level and classification level requirements of the requested medical data network.

In determination block 1054 the medical communication abstraction layer may determine whether the available resources unused by the established medical data network or networks are sufficient to meet the classification requirements of the requested medical data network. For example, the medical communication abstraction layer of a tower may determine whether additional available unused connections and/or bandwidth are available to support the establishment of the requested medical data network. In response to determining the resources are sufficient to support the requested medical data network (i.e., determination block 1054 = "Yes"), in block 1060 the medical communication abstraction layer may establish the requested medical data network.

In response to determining the resources are not sufficient to support the requested medical data network (i.e., determination block 1054 = "No"), in determination block 1056 the medical communication abstraction layer may determine whether the requested medical data network classification level is higher than any established medical data network or networks. In response to determining that the classification level is not higher than any established medical data network or networks (i.e., determination block 536 = "No"), the medical communication abstraction layer may indicate an error in medical data network establishment as discussed above in block 536. In this manner, the medical communication abstraction layer may indicate it is unavailable to support the additional requested medical data network and resources may not be diverted from higher classification medical data networks to lower classification or equal classification level medical data networks.

In response to determining that the classification level is higher than that of any established medical data network or networks (i.e., determination block 1056 = "Yes"), the medical communication abstraction layer may drop one or more lower classification level established medical data networks to free resources sufficient to meet the classification requirements of the requested medical data network in block 1058, and may establish the requested medical data network in block 1060. In this manner, resources and medical data network establishment may be prioritized and given to medical data networks with the highest classification level among a population of requested medical data networks and devices.

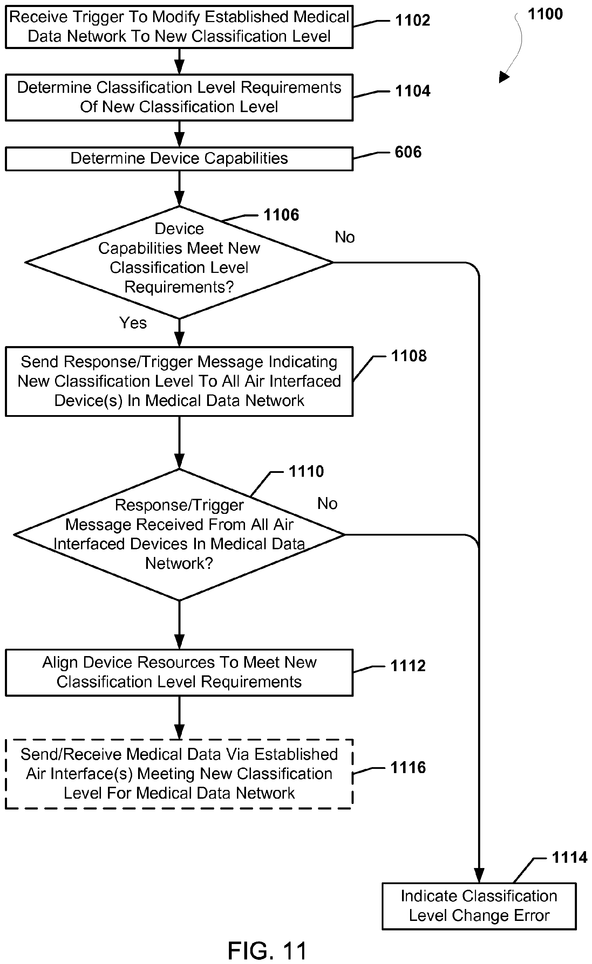

FIG. 11 illustrates an embodiment method 1100 for changing a classification level of a medical data network. In an embodiment, the operations of method 1100 may be performed by a medical communication abstraction layer operating on a processor of a computing device, such as a medical device, mobile device, or base station transmitting/receiving medical data via an air interface. In an embodiment, the operations of method 1100 may be performed in conjunction with the operations of methods 500, 600, or 700 as described above.

In block 1102 the medical communication abstraction layer may receive a trigger to modify an established medical data network to a new classification level. In an embodiment, the trigger may be an indication of a medical event or medical data requiring a different classification. For example, a heart attack may be detected resulting in a trigger to increase the classification level of a medical data network. As another example, an emergency situation may have ended, and a medical data network may be decreased to a lower classification level. In another embodiment, the trigger may be a message sent by another node (device) in the medical data network indicating the new classification level for the medical data network. In block 1104 the medical communication abstraction layer may determine the classification level requirements for the new classification level. For example, the medical communication abstraction layer may determine the classification level from the trigger and compare the determined classification level to a medical data network classification table in memory correlating classification levels and requirements to determine the new classification level requirements.

As discussed above, in block 606 the medical communication abstraction layer may determine the computing device capabilities. In determination block 1106 the medical communication abstraction layer may determine whether the computing device capabilities meet the new classification level requirements. In response to determining that the computing device capabilities do not meet the requirements (i.e., determination block 1106 = "No"), the medical communication abstraction layer may indicate a classification level change error in block 1114.

In response to determining that the computing device capabilities do meet the requirements (i.e., determination block 1106 = "Yes"), the medical communication abstraction layer may send a response/trigger message indicating the new classification level to all air interfaced devices in the medical data network in block 1108. For example, the medical communication abstraction layer may generate and send one or more messages indicating the new classification level and addressed to all nodes (devices) in the medical data network based on the stored node data for the devices received when establishing the network. In determination block 1110 the medical communication abstraction layer may determine whether the response/trigger message was received from all air interfaced devices in the medical data network. For example, the medical communication abstraction layer may track received response/trigger messages from the various nodes (devices) in the medical data network based on the stored node data for the devices received when establishing the network to determine if a response/trigger message has been received from all other nodes (i.e., all air interfaced devices) in the medical data network.

In response to determining that all air interfaced devices do not respond (i.e., determination block 1110 = "No"), the medical communication abstraction layer may indicate a classification level change error in block 1114. In response to determining that a response/trigger is received from all air interface devices (i.e., determination block 1110 = "Yes"), the medical communication abstraction layer may align the computing device resources to meet the new classification level requirements in block 1112. In this manner, the air interfaces of the medical data network may be adjusted to meet the new classification level. In option block 1116 the medical communication abstraction layer may send/receive medical data via the established air interfaces meeting the new classification level for the medical data network.

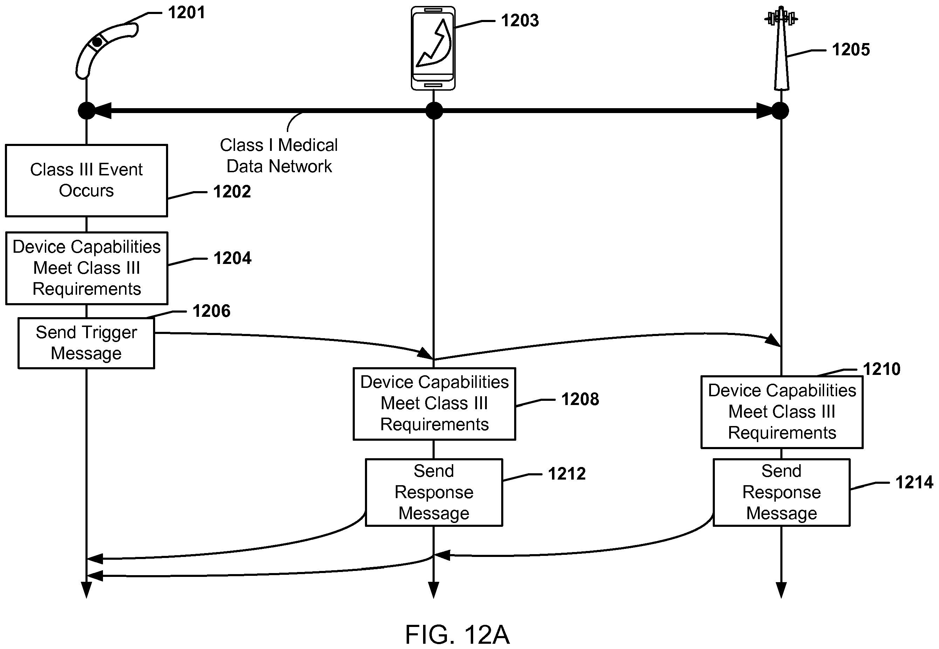

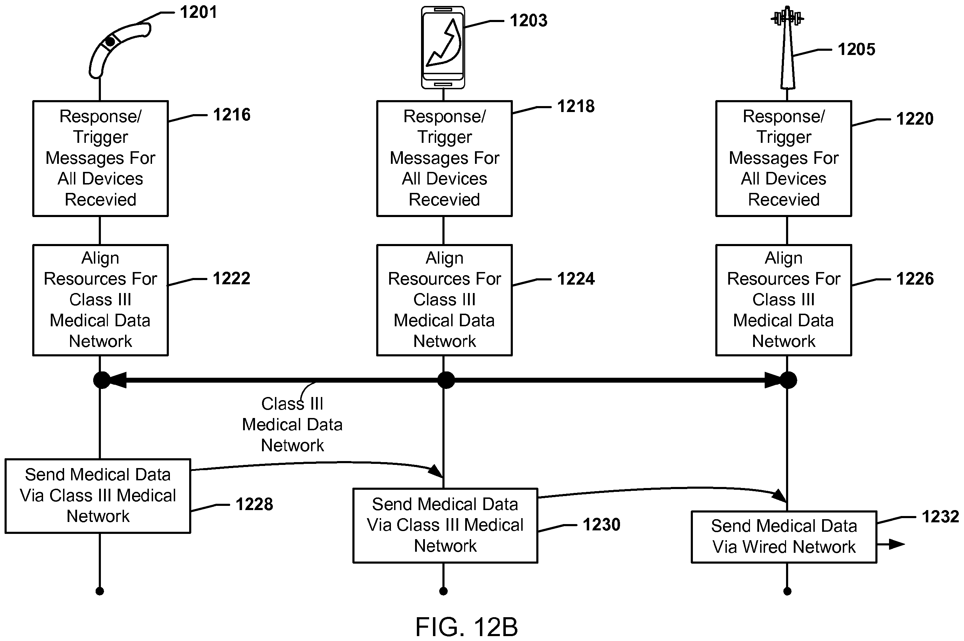

FIGs. 12A and 12B are communication flow diagrams illustrating example interactions between a pulse monitor 1201, a smart phone 1203, and a cellular tower 1205 all having medical communication abstraction layers to change a classification level of an established Class I medical data network. At an initial time a Class I medical data network may be established between the pulse monitor 1201, smart phone 1203, and cellular tower 1205. In block 1202 (FIG. 12A) the medical communication abstraction layer of the pulse monitor 1201 may identify that a Class III event has occurred, such as the pulse of the patient being monitored rising above a critical level. Because the pulse of the patient has risen above the critical level, further medical data from the pulse monitor 1201 may be Class III medical data.

In block 1204 the medical communication abstraction layer of the pulse monitor 1201 may confirm the pulse monitor 1201 capabilities meet the Class III requirements and in block 1206 may send a trigger message to upgrade the medical data network with the smart phone 1203 and cellular tower 1205 to a Class III medical data network. The trigger message may be sent from the pulse monitor 1201 through the medical data network addressed to all the other nodes (i.e., both the smart phone 1203 and cellular tower 1205).

Upon receiving the trigger message in blocks 1208 and 1210 the medical communication abstraction layers of the smart phone 1203 and cellular tower may determine their respective device capabilities to meet the Class III requirements, and in blocks 1212 and 1214 may send response messages indicating their ability to upgrade to a Class III medical data network through the medical data network addressed to all other nodes or at least the pulse monitor 1201.

In blocks 1216, 1218, and 1220 the medical communication abstraction layers of the pulse monitor 1201, smart phone 1203, and cellular tower 1205 may determine response/trigger messages for all devices (nodes) in the medical data network were received, and in blocks 1222, 1224, and 1226 align their respective resources for a Class III medical data network. In this manner, the air interfaces between the pulse monitor 1201, smart phone 1203, and cellular tower 1205 may be upgraded from meeting the Class I requirements to Class III requirements and a Class III medical data network may be established.

In block 1228 the pulse monitor 1201 may send medical data via the Class III medical network to the smart phone 1203, in block 1230 the smart phone 1203 may send the medical data via the Class III medical network to the cellular tower 1205, and in block 1232 the cellular tower 1205 may send the medical data to its intended destination, such as a health care provider computer, via a wired network, such as the Internet.

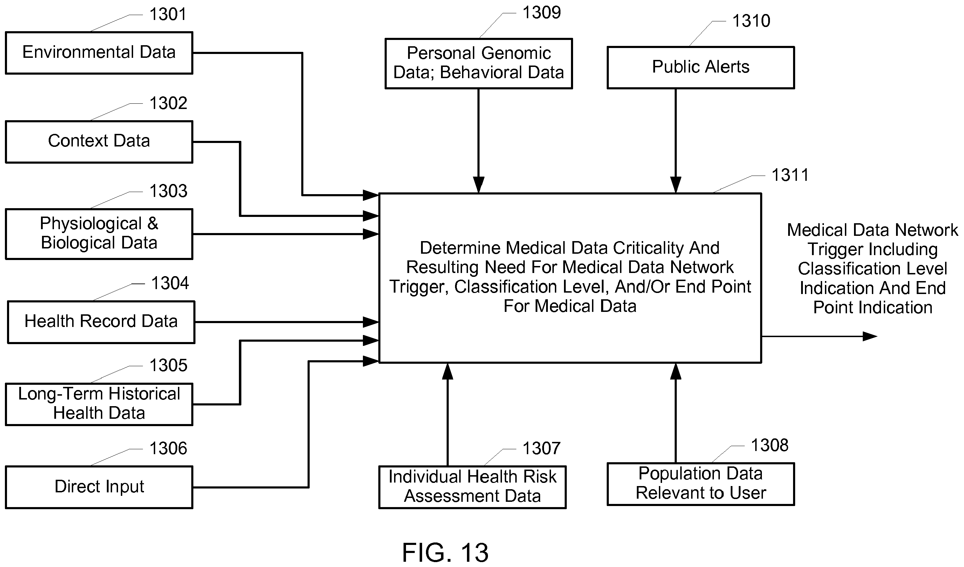

In an embodiment, a medical communication abstraction layer may be manually triggered to establish a medical data network of a given classification level in response to a command from a user, such as a health care provider or patient, or automatically in response to inputs from applications on a computing device, triggers in medical data, and/or inputs from other devices. An example of determining medical data criticality and the need to issue a medical data network trigger is shown in FIG. 13.

Referring to FIG. 13, medical data criticality may be determined by combining or fusing, by a medical communication abstraction layer or other application running on a device, a multitude of different types of data that may be relevant to a user's condition and well being. For example, environmental data 1301, such as air quality, temperature and/or humidity, may be used to determine the medical data criticality. Air quality and temperature may be important to an asthma patient.

Medical data criticality may also depend on context of the user 1302, such as the geographical location of the user, and whether the user is resting, walking, running, or falling, which may be inferred, for example, by sensors worn by the user or sensors on a wearable mobile device. Additionally, physiological and biological data 1303 may be obtained from sensors worn on the body (e.g., heart rate and blood pressure data), sensors on-board the mobile device, or a remote sensor (e.g., a sensor communicating with the mobile device through a short-range connection, such as Bluetooth®, or through a long-range connection, such as the Internet or a communications network).

Both long-term medical data 1304, that is data from user's medical records (e.g., imaging, lab results, medications, etc.) and long-term historical health data 1305, such as weekly or daily averages of blood pressure measurements, weekly energy expenditure profile, daily average heart rate values, or heart rate variability, may be used in determining the criticality of the medical data.

Also, direct inputs 1306 may provide direct, timely and current directives and inputs from healthcare professionals, caregivers of the user, or even the user themselves, may be factored in determining the medical data criticality. The user may not feel so well that day, for example, and may have the means to input that information into the system.

Other types of data that may be accessible by the mobile device, include personal genomic data and behavioral data 1309, public alerts, such as those from Centers for Disease Control (CDC), that may be relevant to specific user and her condition 1310, population data from patients that are like the user 1308, and individual health-risk assessment data of the individual 1307, e.g., high risk for heart disease.

Any received data 1301, 1302, 1303, 1304, 1305, 1307, 1308, 1309, 1310, 1310 and/or received direct inputs 1306 may be used, separately or in combination, by a medical communication abstraction layer or other application running on a device in block 1311 to determine the medical data criticality and resulting need to issue a medical data network trigger, the classification level for a needed medical data network, and/or the end point for the medical data based on the determined criticality. In response to determining the medical data criticality, the medical communication abstraction layer or other application running on a device may generate and send a medical data network trigger including the necessary classification level indication and an end point indication for the medical data.

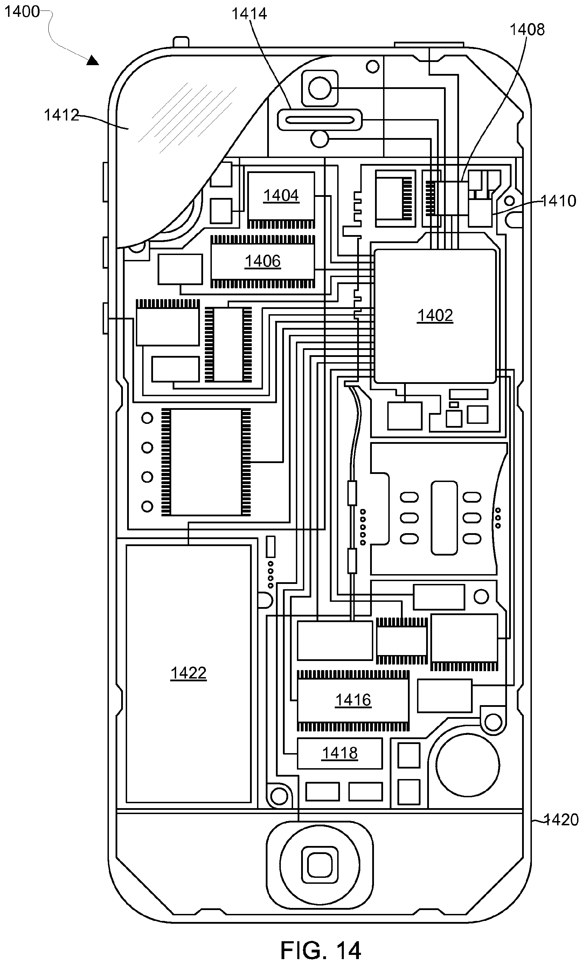

The various embodiments may be implemented in any of a variety of mobile devices, an example of which is illustrated in FIG. 14. For example, the mobile device 1400 may include a processor 1402 coupled to internal memories 1404 and 1406. Internal memories 1404 and 1406 may be volatile or non-volatile memories, and may also be secure and/or encrypted memories, or unsecure and/or unencrypted memories, or any combination thereof. The processor 1402 may also be coupled to a touch screen display 1412, such as a resistive-sensing touch screen, capacitive-sensing touch screen infrared sensing touch screen, or the like. Additionally, the display of the computing device 1400 need not have touch screen capability.

The mobile device 1400 may have one or more radio signal transceivers 1408 (e.g., Peanut®, Bluetooth®, Zigbee®, Wi-Fi, RF radio) and antennae 1410, for sending and receiving, coupled to each other and/or to the processor 1402. The mobile device 1400 may include a cellular network interface, such as wireless modem chip 1416, that enables communication via a cellular data network (e.g., CDMA, TDMA, GSM, PCS, 3G, 4G, LTE, or any other type of cellular data network) and is coupled to the processor 1402. The mobile device 1400 may include a peripheral device connection interface 1418 coupled to the processor 1402. The peripheral device connection interface 1418 may be singularly configured to accept one type of connection, or multiply configured to accept various types of physical and communication connections, common or proprietary, such as USB, FireWire, Thunderbolt, or PCIe. The peripheral device connection interface 1418 may also be coupled to a similarly configured peripheral device connection port. The mobile device 1400 may also include speakers 1414 for providing audio outputs.

The mobile device 1400 may also include a housing 1420, constructed of a plastic, metal, or a combination of materials, for containing all or some of the components discussed herein. The mobile device 1400 may include a power source 1422 coupled to the processor 1402, such as a disposable or rechargeable battery. The rechargeable battery may also be coupled to the peripheral device connection port to receive a charging current from a source external to the mobile device 1400.

The processors 206, 210, 222, 232, 234, 252, 262, 270, 271, 282, 286, 290, and 1402 may be any programmable microprocessor, microcomputer or multiple processor chip or chips that can be configured by software instructions (applications) to perform a variety of functions, including the functions of the various embodiments described above. In some devices, multiple processors may be provided, such as one processor dedicated to wireless communication functions and one processor dedicated to running other applications. Typically, software applications may be stored in the internal memory 208, 224, 254, 284, 1404, and 1406 before they are accessed and loaded into the processors 206, 210, 222, 232, 234, 252, 262, 270, 271, 282, 286, 290, and 1402. The processors 206, 210, 222, 232, 234, 252, 262, 270, 271, 282, 286, 290, and 1402 may include internal memory sufficient to store the application software instructions. In many devices the internal memory may be a volatile or nonvolatile memory, such as flash memory, or a mixture of both. For the purposes of this description, a general reference to memory refers to memory accessible by the processors 206, 210, 222, 232, 234, 252, 262, 270, 271, 282, 286, 290, and 1402 including internal memory or removable memory plugged into the computing device and memory within the processor 206, 210, 222, 232, 234, 252, 262, 270, 271, 282, 286, 290, and 1402 themselves.

The foregoing method descriptions and the process flow diagrams are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The hardware used to implement the various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, some steps or methods may be performed by circuitry that is specific to a given function.

In one or more exemplary aspects, the functions described may be implemented in hardware, software, firmware, or any combination thereof. If implemented in software, the functions may be stored as one or more instructions or code on a non-transitory computer-readable medium or non-transitory processor-readable medium. The steps of a method or algorithm disclosed herein may be embodied in a processor-executable software module which may reside on a non-transitory computer-readable or processor-readable storage medium. Non-transitory computer-readable or processor-readable storage media may be any storage media that may be accessed by a computer or a processor. By way of example but not limitation, such non-transitory computer-readable or processor-readable media may include RAM, ROM, EEPROM, FLASH memory, CD-ROM or other optical disk storage, magnetic disk storage or other magnetic storage devices, or any other medium that may be used to store desired program code in the form of instructions or data structures and that may be accessed by a computer. Disk and disc, as used herein, includes compact disc (CD), laser disc, optical disc, digital versatile disc (DVD), floppy disk, and blu-ray disc where disks usually reproduce data magnetically, while discs reproduce data optically with lasers. Combinations of the above are also included within the scope of non-transitory computer-readable and processor-readable media. Additionally, the operations of a method or algorithm may reside as one or any combination or set of codes and/or instructions on a non-transitory processor-readable medium and/or computer-readable medium, which may be incorporated into a computer program product.

The preceding description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the following claims and the principles and novel features disclosed herein.

## Claims

1. A method (500) performed in a device, the method comprising the steps of:
determining (504), in a processor, a classification level associated with a received medical data network trigger;
determining (512), in the processor, a capability to meet a requirement of the determined classification level of available air interfaces with one or more other devices in response to determining the classification level associated with the received medical data network trigger;
selecting (516), in the processor, at least one device and at least one of its corresponding air interfaces having the determined capability to meet the requirement of the determined classification level from the available air interfaces with the one or more other devices;
establishing (518) the selected at least one air interface meeting the requirement of the determined classification level with the selected at least one device to establish a medical data network with the classification level; **characterized by**:
sending (520) an indication of the medical data network with the classification level to another connected device that is not part of the medical data network such that the another connected device does not send data to any devices in the medical data network while the medical data network is established in response to determining that the classification level indicates deference to the medical data network is required.

2. The method of claim 1, wherein the classification level is a health regulatory authority assigned classification level.

3. The method of claim 2, further comprising sending or receiving medical data via the at least one air interface of the established medical data network.

4. The method of claim 2, wherein determining, in the processor, a capability to meet a requirement of the determined classification level of the determined available air interfaces and the one or more other devices comprises:
polling the one or more other devices via the determined air interfaces regarding each of the one or more other devices' capability to meet the requirement of the determined classification level; and
determining, in the processor, a capability to meet a requirement of the determined classification level of the determined available air interfaces and the one or more other devices based on responses to the polling received from the one or more other devices.

5. The method of claim 2, wherein selecting, in the processor, at least one device and at least one of its corresponding air interfaces from the one or more other devices and available air interfaces with the one or more other devices comprises selecting the fastest air interface.

6. The method of claim 2, further comprising:
receiving a trigger to modify the medical data network to a new classification level; and
aligning a resource such that the selected at least one air interface meets a new requirement of the new classification level.

7. The method of claim 2, wherein the classification level is one of a plurality of different classification levels each having at least one unique requirement selected from the group consisting of a bandwidth requirement, a packet redundancy requirement, a quality of service requirement, a latency requirement, a security requirement, and a link redundancy requirement.

8. The method of claim 1, further comprising indicating to a user that a medical data network with the classification level is established in response to establishing the selected at least one air interface meeting the requirement of the determined classification level with the selected at least one device.

9. The method of claim 1, further comprising:
receiving, in the processor, a request to establish another medical data network from another device;
determining, in the processor, a classification level associated with the received request to establish the another medical data network;
determining, in the processor, whether a resource in use by the selected air interface is needed to establish the another medical data network;
determining, in the processor, whether the classification level associated with the received request to establish the another medical data network is higher than the classification level associated with the received medical data network trigger in response to determining that a resource in use by the selected air interface is needed to establish the another medical data network; and
aligning the resource to establish the another medical data network in response to determining the classification level associated with the received request to establish the another medical data network is higher than the classification level associated with the received medical data network trigger.

10. The method of claim 1, wherein the received medical data network trigger is one or more of a patient health condition trigger, a patient preexisting condition trigger, an environmental condition trigger, a context trigger, and a location trigger.

11. A device (200), comprising:
means for determining (206) a classification level associated with a received medical data network trigger;
means for determining (206) a capability to meet a requirement of the determined classification level of available air interfaces with one or more other devices in response to determining the classification level associated with the received medical data network trigger;
means for selecting (206) at least one device and at least one of its corresponding air interfaces having the determined capability to meet the requirement of the determined classification level from the available air interfaces with the one or more other devices;
means for establishing (212) the selected at least one air interface meeting the requirement of the determined classification level with the selected at least one device to establish a medical data network with the classification level; **characterized by**:
means for sending (212) an indication of the medical data network with the classification level to another connected device that is not part of the medical data network such that the another connected device does not send data to any devices in the medical data network while the medical data network is established in response to determining that the classification level indicates deference to the medical data network is required.

12. A non-transitory processor-readable medium (208) having stored thereon processor-executable instructions configured to cause a processor (206) to perform operations comprising:
determining (504) a classification level associated with a received medical data network trigger;
determining (512) a capability to meet a requirement of the determined classification level of available air interfaces with one or more other devices in response to determining the classification level associated with the received medical data network trigger;
selecting (516) at least one device and at least one of its corresponding air interfaces having the determined capability to meet the requirement of the determined classification level from the available air interfaces with the one or more other devices;
establishing (518) the selected at least one air interface meeting the requirement of the determined classification level with the selected at least one device to establish a medical data network with the classification level via an RF resource,
**characterized by**:
sending (520) via the RF resource an indication of the medical data network with the classification level to another connected device that is not part of the medical data network such that the another connected device does not send data to any devices in the medical data network while the medical data network is established in response to determining that the classification level indicates deference to the medical data network is required.

13. A system, comprising:
a first device (1201);
a second device (1203); and
a third device (1205),
wherein the first device (1201) comprises:
means for determining (1204) a classification level associated with a received medical data network trigger; and
means for polling (1206) the second device regarding the second device's capabilities in response to determining the classification level;
wherein the second device (1203) comprises means for sending (1212) an indication of the second device's capabilities to the first device in response to the polling,
wherein the first device (1201) further comprises:
means for determining a capability to meet a requirement of the determined classification level of available air interfaces with the second device in response to receiving the indication of the second device's capabilities;
means for selecting (1222) at least one air interface having the determined capability to meet the requirement of the determined classification level from the available air interfaces with the second device; and
means for establishing the selected at least one air interface meeting the requirement of the determined classification level with the second device to establish a medical data network with the classification level,
wherein the second device (1203) further comprises means for establishing (1224) the selected at least one air interface meeting the requirement of the determined classification level with the first device to establish the medical data network with the classification level,
wherein the first device (1201) further comprises means for sending an indication of the medical data network with the classification level to the third device,
wherein the third device (1205) comprises:
means for receiving the indication of the medical data network with the classification level;
means for determining (1210) that the classification level indicates deference to the medical data network is required; and
means for taking a deference action in response to determining that the classification level indicates deference to the medical data network is required, wherein the deference action is not sending data to any devices in the medical data network while the medical data network is established.

14. The system of claim 13, wherein the classification level is a health regulatory authority assigned classification level.

15. The system of claim 14, wherein the classification level is one of a plurality of different classification levels each having at least one unique requirement selected from the group consisting of a bandwidth requirement, a packet redundancy requirement, a quality of service requirement, a latency requirement, a security requirement, and a link redundancy requirement.

## Patentansprüche

1. Ein Verfahren (500), das in einer Einrichtung durchgeführt wird, wobei das Verfahren die folgenden Schritte aufweist:
Bestimmen (504), in einem Prozessor, einer Klassifikationsstufe, die mit einem empfangenen Auslöser bzw. Trigger eines medizinischen Datennetzwerkes assoziiert ist;
Bestimmen (512), in dem Prozessor, einer Fähigkeit, eine Anforderung der bestimmten Klassifikationsstufe von verfügbaren Luftschnittstellen mit einer oder mehreren anderen Einrichtungen zu erfüllen ansprechend auf das Bestimmen der Klassifikationsstufe, die mit dem empfangenen Auslöser des medizinischen Datennetzwerkes assoziiert ist;
Auswählen (516), in dem Prozessor, wenigstens einer Einrichtung und wenigstens einer ihrer entsprechenden Luftschnittstellen, die die bestimmte Fähigkeit hat, um die Anforderung der bestimmten Klassifikationsstufe zu erfüllen, aus den verfügbaren Luftschnittstellen mit der einen oder den mehreren anderen Einrichtungen;
Einrichten (518) der ausgewählten wenigstens einen Luftschnittstelle, die die Anforderung der bestimmten Klassifikationsstufe erfüllt, mit der ausgewählten wenigstens einen Einrichtung zum Einrichten eines medizinischen Datennetzwerkes mit der Klassifikationsstufe;
**gekennzeichnet durch**:
Senden (520) einer Anzeige des medizinischen Datennetzwerkes mit der Klassifikationsstufe an eine andere verbundene Einrichtung, die nicht Teil des medizinischen Datennetzwerkes ist, so dass die andere verbundene Einrichtung nicht Daten an irgendwelche Einrichtungen in dem medizinischen Datennetzwerk sendet, während das medizinische Datennetzwerk eingerichtet ist, ansprechend auf Bestimmen, dass die Klassifikationsstufe anzeigt, dass eine Rücksichtnahme auf das medizinische Datennetzwerk erforderlich ist.

2. Verfahren nach Anspruch 1, wobei die Klassifikationsstufe eine Klassifikationsstufe ist, die durch eine Gesundheitsbehörde zugewiesen worden ist.

3. Verfahren nach Anspruch 2, das weiter Senden oder Empfangen von medizinischen Daten über die wenigstens eine Luftschnittstelle des eingerichteten medizinischen Datennetzwerks aufweist.

4. Verfahren nach Anspruch 2, wobei das Bestimmen, in dem Prozessor, einer Fähigkeit zum Erfüllen einer Anforderung der bestimmten Klassifikationsstufe der bestimmten verfügbaren Luftschnittstellen und der ein oder mehreren anderen Einrichtungen Folgendes aufweist:
Abfragen der ein oder mehreren anderen Einrichtungen über die bestimmten Luftschnittstellen bezüglich der Fähigkeit jeder der ein oder mehreren anderen Einrichtungen, die Anforderung der bestimmten Klassifikationsstufe zu erfüllen; und
Bestimmen, in dem Prozessor, einer Fähigkeit eine Anforderung der bestimmten Klassifikationsstufe der bestimmten verfügbaren Luftschnittstellen und der ein oder mehreren anderen Einrichtungen zu erfüllen basierend auf Antworten auf das Abfragen, die von den ein oder mehreren anderen Einrichtungen empfangen werden.

5. Verfahren nach Anspruch 2, wobei das Auswählen, in dem Prozessor, von wenigstens einer Einrichtung und wenigstens einer ihrer entsprechenden Luftschnittstellen aus den ein oder mehreren anderen Einrichtungen und verfügbaren Luftschnittstellen mit den ein oder mehreren anderen Einrichtungen Auswählen der schnellsten Luftschnittstelle aufweist.

6. Verfahren nach Anspruch 2, das weiter Folgendes aufweist:
Empfangen eines Auslösers bzw. Triggers zum Modifizieren des medizinischen Datennetzwerkes hin zu einer neuen Klassifikationsstufe; und Ausrichten einer Ressource, so dass die ausgewählte wenigstens eine Luftschnittstelle eine neue Anforderung der neuen Klassifikationsstufe erfüllt.

7. Verfahren nach Anspruch 2, wobei die Klassifikationsstufe eine einer Vielzahl von unterschiedlichen Klassifikationsstufen ist, die jeweils wenigstens eine eindeutige Anforderung haben, die aus der Gruppe ausgewählt ist, die aus Folgendem besteht: einer Bandbreitenanforderung, einer Paketredundanzanforderung, einer Dienstqualitätsanforderung, einer Latenzanforderung, einer Sicherheitsanforderung und einer Verbindungredundanzanforderung.

8. Verfahren nach Anspruch 1, das weiter Anzeigen, gegenüber einem Nutzer aufweist, dass ein medizinisches Datennetzwerk mit der Klassifikationsstufe eingerichtet ist ansprechend auf Einrichten der ausgewählten wenigstens einen Luftschnittstelle, die die Anforderung der bestimmten Klassifikationsstufe erfüllt, mit der wenigstens einen Einrichtung.

9. Verfahren nach Anspruch 1, das weiter Folgendes aufweist:
Empfangen, in dem Prozessor, einer Anfrage ein weiteres medizinisches Datennetzwerk einzurichten, von einer weiteren Einrichtung;
Bestimmen, in dem Prozessor, einer Klassifikationsstufe, die mit der empfangenen Anfrage zum Einrichten des weiteren medizinischen Datennetzwerkes assoziiert ist;
Bestimmen, in dem Prozessor, ob eine Ressource, die durch die ausgewählte Luftschnittstelle verwendet wird, benötigt wird zum Einrichten des weiteren medizinischen Datennetzwerks;
Bestimmen, in dem Prozessor, ob die Klassifikationsstufe, die mit der empfangenen Anfrage zum Einrichten des weiteren medizinischen Datennetzwerkes assoziiert ist, höher ist als die Klassifikationsstufe, die mit dem empfangenen Trigger bzw. Auslöser des medizinischen Datennetzwerkes assoziiert ist ansprechend auf Bestimmen, dass eine Ressource, die durch die ausgewählte Luftschnittstelle verwendet wird, zum Einrichten des weiteren medizinischen Datennetzwerks benötigt wird; und
Ausrichten bzw. Anpassen der Ressource zum Einrichten des weiteren medizinischen Datennetzwerks ansprechend auf Bestimmen, dass die Klassifikationsstufe, die mit der empfangenen Anfrage zum Einrichten des weiteren medizinischen Datennetzwerks assoziiert ist, höher ist als die Klassifikationsstufe, die mit dem empfangenen Trigger bzw. Auslöser des medizinischen Datennetzwerks assoziiert ist.

10. Verfahren nach Anspruch 1, wobei der empfangene Trigger bzw. Auslöser des medizinischen Datennetzwerks ein oder mehreres von Folgendem ist:
ein Auslöser eines Patientengesundheitszustandes, ein Auslöser einer Vorerkrankung des Patentien, ein Auslöser eines Umwelt- bzw. Umgebungszustandes, ein Kontexttrigger bzw. -auslöser und ein Standorttrigger bzw. -auslöser.

11. Eine Einrichtung (200), die Folgendes aufweist:
Mittel zum Bestimmen (206) einer Klassifikationsstufe, die mit einem empfangenen Auslöser bzw. Trigger eines medizinischen Datennetzwerkes assoziiert ist;
Mittel zum Bestimmen (206) einer Fähigkeit, eine Anforderung der bestimmten Klassifikationsstufe von verfügbaren Luftschnittstellen mit einer oder mehreren anderen Einrichtungen zu erfüllen ansprechend auf das Bestimmen der Klassifikationsstufe, die mit dem empfangenen Auslöser des medizinischen Datennetzwerkes assoziiert ist;
Mittel zum Auswählen (206) wenigstens einer Einrichtung und wenigstens einer ihrer entsprechenden Luftschnittstellen, die die bestimmte Fähigkeit hat, um die Anforderung der bestimmten Klassifikationsstufe zu erfüllen, aus den verfügbaren Luftschnittstellen mit der einen oder den mehreren anderen Einrichtungen;
Mittel zum Einrichten (212) der ausgewählten wenigstens einen Luftschnittstelle, die die Anforderung der bestimmten Klassifikationsstufe erfüllt, mit der ausgewählten wenigstens einen Einrichtung zum Einrichten eines medizinischen Datennetzwerkes mit der Klassifikationsstufe;
**gekennzeichnet durch**:
Mittel zum Senden (212) einer Anzeige des medizinischen Datennetzwerkes mit der Klassifikationsstufe an eine andere verbundene Einrichtung, die nicht Teil des medizinischen Datennetzwerkes ist, so dass die andere verbundene Einrichtung nicht Daten an irgendwelche Einrichtungen in dem medizinischen Datennetzwerk sendet, während das medizinische Datennetzwerk eingerichtet ist, ansprechend auf Bestimmen, dass die Klassifikationsstufe anzeigt, dass eine Rücksichtnahme auf das medizinische Datennetzwerk erforderlich ist.

12. Ein nicht transitorisches prozessorlesbares Medium (208) mit darauf gespeicherten von einem Prozessor ausführbaren Instruktionen, die konfiguriert sind, um einen Prozessor (206) zu veranlassen, Operationen durchzuführen, die Folgendes aufweisen:
Bestimmen (504) einer Klassifikationsstufe, die mit einem empfangenen Auslöser bzw. Trigger eines medizinischen Datennetzwerkes assoziiert ist;
Bestimmen (512) einer Fähigkeit, eine Anforderung der bestimmten Klassifikationsstufe von verfügbaren Luftschnittstellen mit einer oder mehreren anderen Einrichtungen zu erfüllen ansprechend auf das Bestimmen der Klassifikationsstufe, die mit dem empfangenen Auslöser des medizinischen Datennetzwerkes assoziiert ist;
Auswählen (516) wenigstens einer Einrichtung und wenigstens einer ihrer entsprechenden Luftschnittstellen, die die bestimmte Fähigkeit hat, um die Anforderung der bestimmten Klassifikationsstufe zu erfüllen, aus den verfügbaren Luftschnittstellen mit der einen oder den mehreren anderen Einrichtungen;
Einrichten (518) der ausgewählten wenigstens einen Luftschnittstelle, die die Anforderung der bestimmten Klassifikationsstufe erfüllt, mit der ausgewählten wenigstens einen Einrichtung zum Einrichten eines medizinischen Datennetzwerkes mit der Klassifikationsstufe über eine HF-Ressource;
**gekennzeichnet durch**:
Senden (520), über die HF-Ressource, einer Anzeige des medizinischen Datennetzwerkes mit der Klassifikationsstufe an eine andere verbundene Einrichtung, die nicht Teil des medizinischen Datennetzwerkes ist, so dass die andere verbundene Einrichtung nicht Daten an irgendwelche Einrichtungen in dem medizinischen Datennetzwerk sendet, während das medizinische Datennetzwerk eingerichtet ist ansprechend auf Bestimmen, dass die Klassifikationsstufe anzeigt, dass eine Rücksichtnahme auf das medizinische Datennetzwerk erforderlich ist.

13. Ein System, das Folgendes aufweist:
eine erste Einrichtung (1201);
eine zweite Einrichtung (1203); und
eine dritte Einrichtung (1205),
wobei die erste Einrichtung (1201) Folgendes aufweist:
Mittel zum Bestimmen (1204) einer Klassifikationsstufe, die mit einem empfangenen Trigger bzw. Auslöser eines medizinischen Datennetzwerkes assoziiert ist; und
Mittel zum Abfragen (1206) der zweiten Einrichtung hinsichtlich der Fähigkeiten der zweiten Einrichtung ansprechend auf Bestimmen der Klassifikationsstufe;
wobei die zweite Einrichtung (1203) Mittel aufweist zum Senden (1212) einer Anzeige der Fähigkeiten der zweiten Einrichtung an die erste Einrichtung ansprechend auf das Abfragen;
wobei die erste Einrichtung (1201) weiter Folgendes aufweist:
Mittel zum Bestimmen einer Fähigkeit zum Erfüllen einer Anforderung der bestimmten Klassifikationsstufe der verfügbaren Luftschnittstellen mit der zweiten Einrichtung ansprechend auf Empfangen der Anzeige der Fähigkeiten der zweiten Einrichtung;
Mittel zum Auswählen (1222) wenigstens einer Luftschnittstelle, die die bestimmte Fähigkeit hat, um die Anforderung der bestimmten Klassifikationsstufe zu erfüllen, aus den verfügbaren Luftschnittstellen mit der zweiten Einrichtung; und
Mittel zum Einrichten der ausgewählten wenigstens einen Luftschnittstelle, die die Anforderung der bestimmten Klassifikationsstufe erfüllt, mit der zweiten Einrichtung zum Einrichten eines medizinischen Datennetzwerkes der Klassifikationsstufe, wobei die zweite Einrichtung (1203) weiter Mittel aufweist zum Einrichten (1224) der ausgewählten wenigstens einen Luftschnittstelle, die die Anforderung der bestimmten Klassifikationsstufe erfüllt, mit der ersten Einrichtung zum Einrichten des medizinischen Datennetzwerkes mit der Klassifikationsstufe,
wobei die erste Einrichtung (1201) weiter Mittel aufweist zum Senden einer Anzeige des medizinischen Datennetzwerkes mit der Klassifikationsstufe an die dritte Einrichtung,
wobei die dritte Einrichtung (1205) Folgendes aufweist:
Mittel zum Empfangen der Anzeige des medizinischen Datennetzwerkes mit der Klassifikationsstufe;
Mittel zum Bestimmen (1210), dass die Klassifikationsstufe anzeigt, dass eine Rücksichtnahme auf das medizinische Datennetzwerk erforderlich ist; und
Mittel zum Vornehmen einer Rücksichtnahmeaktion ansprechend auf Bestimmen, dass die Klassifikationsstufe anzeigt, dass eine Rücksichtnahme auf das medizinische Datennetzwerk erforderlich ist, wobei die Rücksichtnahmeaktion das Nicht-Senden von Daten an irgendwelche Einrichtungen in dem medizinischen Datennetzwerk ist, während das medizinische Datennetzwerk eingerichtet ist.

14. System nach Anspruch 13, wobei die Klassifikationsstufe eine durch eine Gesundheitsbehörde zugewiesene Klassifikationsstufe ist.

15. System nach Anspruch 14, wobei die Klassifikationsstufe eine einer Vielzahl von unterschiedlichen Klassifikationsstufen ist, die jeweils wenigstens eine eindeutige Anforderung haben, die aus der Gruppe ausgewählt ist, die aus Folgendem besteht: einer Bandbreitenanforderung, einer Paketredundanzanforderung, einer Dienstqualitätsanforderung, einer Latenzanforderung, einer Sicherheitsanforderung und einer Verbi0ndungredundanzanforderung.

## Revendications

1. Un procédé (500) exécuté dans un dispositif, le procédé comprenant les opérations suivantes :
la détermination (504), dans un processeur, d'un niveau de classement associé à un déclencheur de réseau de données médicales reçu,
la détermination (512), dans le processeur, d'une capacité de satisfaire une exigence du niveau de classement déterminé d'interfaces hertziennes disponibles avec un ou plusieurs autres dispositifs en réponse à la détermination du niveau de classement associé au déclencheur de réseau de données médicales reçu,
la sélection (516), dans le processeur, d'au moins une dispositif et d'au moins une de ses interfaces hertziennes correspondantes possédant la capacité déterminée de satisfaire l'exigence du niveau de classement déterminé à partir des interfaces hertziennes disponibles avec les un ou plusieurs autres dispositifs,
l'établissement (518) de la au moins une interface hertzienne sélectionnée qui satisfait l'exigence du niveau de classement déterminé avec le au moins un dispositif sélectionné de façon à établir un réseau de données médicales avec le niveau de classement,
**caractérisé par** :
l'envoi (520) d'une indication du réseau de données médicales avec le niveau de classement à un autre dispositif connecté qui ne fait pas partie du réseau de données médicales de sorte que l'autre dispositif connecté n'envoie pas de données à un dispositif quelconque dans le réseau de données médicales pendant que le réseau de données médicales est établi en réponse à la détermination que le niveau de classement indique qu'un ajournement vers le réseau de données médicales est requis.

2. Le procédé selon la Revendication 1, où le niveau de classement est un niveau de classement attribué par une autorité de réglementation de la santé.

3. Le procédé selon la Revendication 2, comprenant en outre l'envoi ou la réception de données médicales par l'intermédiaire de la au moins une interface hertzienne du réseau de données médicales établi.

4. Le procédé selon la Revendication 2, où la détermination, dans le processeur, d'une capacité de satisfaire une exigence du niveau de classement déterminé des interfaces hertziennes disponibles déterminées et des un ou plusieurs autres dispositifs comprend :
l'interrogation des un ou plusieurs autres dispositifs par l'intermédiaire des interfaces hertziennes déterminées à propos de la capacité de chacun des un ou plusieurs autres dispositifs de satisfaire l'exigence du niveau de classement déterminé, et
la détermination, dans le processeur, d'une capacité de satisfaire une exigence du niveau de classement déterminé des interfaces hertziennes disponibles déterminées et des un ou plusieurs autres dispositifs en fonction de réponses à l'interrogation reçues des un ou plusieurs autres dispositifs.

5. Le procédé selon la Revendication 2, où la sélection, dans le processeur, d'au moins un dispositif et d'au moins une de ses interfaces hertziennes correspondantes à partir des un ou plusieurs autres dispositifs et des interfaces hertziennes disponibles avec les un ou plusieurs autres dispositifs comprend la sélection de l'interface hertzienne la plus rapide.

6. Le procédé selon la Revendication 2, comprenant en outre :
la réception d'un déclencheur destiné à la modification du réseau de données médicales vers un nouveau niveau de classement, et
l'alignement d'une ressource de sorte que la au moins une interface hertzienne sélectionnée satisfasse une nouvelle exigence du nouveau niveau de classement.

7. Le procédé selon la Revendication 2, où le niveau de classement est un niveau d'une pluralité de niveaux de classement différents, chacun d'eux possédant au moins une exigence unique sélectionnée dans le groupe se composant d'une exigence de bande passante, d'une exigence de redondance de paquets, d'une exigence de qualité de service, d'une exigence de temps de latence, d'une exigence de sécurité et d'une exigence de redondance de liaison.

8. Le procédé selon la Revendication 1, comprenant en outre l'indication à un utilisateur qu'un réseau de données médicales avec le niveau de classement est établi en réponse à l'établissement de la au moins une interface hertzienne sélectionnée qui satisfait l'exigence du niveau de classement déterminé avec le au moins un dispositif sélectionné.

9. Le procédé selon la Revendication 1, comprenant en outre :
la réception, dans le processeur, d'une demande d'établissement d'un autre réseau de données médicales à partir d'un autre dispositif,
la détermination, dans le processeur, d'un niveau de classement associé à la demande reçue d'établissement de l'autre réseau de données médicales,
la détermination, dans le processeur, si une ressource utilisée par l'interface hertzienne sélectionnée est nécessaire pour l'établissement de l'autre réseau de données médicales,
la détermination, dans le processeur, si le niveau de classement associé à la demande reçue d'établissement de l'autre réseau de données médicales est supérieur au niveau de classement associé au déclencheur de réseau de données médicales reçu en réponse à la détermination qu'une ressource utilisée par l'interface hertzienne sélectionnée est nécessaire pour l'établissement de l'autre réseau de données médicales, et
l'alignement de la ressource destinée à l'établissement de l'autre réseau de données médicales en réponse à la détermination que le niveau de classement associé à la demande reçue d'établissement de l'autre réseau de données médicales est supérieur au niveau de classement associé au déclencheur de réseau de données médicales reçu.

10. Le procédé selon la Revendication 1, où le déclencheur de réseau de données médicales reçu est un ou plusieurs déclencheurs parmi un déclencheur d'état de santé d'un patient, un déclencheur d'état préexistant d'un patient, un déclencheur d'état environnemental, un déclencheur de contexte et un déclencheur d'emplacement.

11. Un dispositif (200), comprenant :
un moyen de détermination (206) d'un niveau de classement associé à un déclencheur de réseau de données médicales reçu,
un moyen de détermination (206) d'une capacité de satisfaire une exigence du niveau de classement déterminé d'interfaces hertziennes disponibles avec un ou plusieurs autres dispositifs en réponse à la détermination du niveau de classement associé au déclencheur de réseau de données médicales reçu,
un moyen de sélection (206) d'au moins un dispositif et d'au moins une de ses interfaces hertziennes correspondantes possédant la capacité déterminée de satisfaire l'exigence du niveau de classement déterminé à partir des interfaces hertziennes disponibles avec les un ou plusieurs autres dispositifs,
un moyen d'établissement (212) de la au moins une interface hertzienne sélectionnée qui satisfait l'exigence du niveau de classement déterminé avec le au moins un dispositif sélectionné de façon à établir un réseau de données médicales avec le niveau de classement,
**caractérisé par** :
un moyen d'envoi (212) d'une indication du réseau de données médicales avec le niveau de classement à un autre dispositif connecté qui ne fait pas partie du réseau de données médicales de sorte que l'autre dispositif connecté n'envoie pas de données à un dispositif quelconque dans le réseau de données médicales pendant que le réseau de données médicales est établi en réponse à la détermination que le niveau de classement indique qu'un ajournement vers le réseau de données médicales est requis.

12. Un support lisible par un processeur non transitoire (208) possédant conservées en mémoire sur celui-ci des instructions exécutables par un processeur configurées de façon à amener un processeur (206) à exécuter des opérations comprenant :
la détermination (504) d'un niveau de classement associé à un déclencheur de réseau de données médicales reçu,
la détermination (512) d'une capacité de satisfaire une exigence du niveau de classement déterminé d'interfaces hertziennes disponibles avec un ou plusieurs autres dispositifs en réponse à la détermination du niveau de classement associé au déclencheur de réseau de données médicales reçu,
la sélection (516) d'au moins un dispositif et d'au moins une de ses interfaces hertziennes correspondantes possédant la capacité déterminée de satisfaire l'exigence du niveau de classement déterminé à partir des interfaces hertziennes disponibles avec les un ou plusieurs autres dispositifs,
l'établissement (518) de la au moins une interface hertzienne sélectionnée qui satisfait l'exigence du niveau de classement déterminé avec le au moins un dispositif sélectionné de façon à établir un réseau de données médicales avec le niveau de classement par l'intermédiaire d'une ressource RF,
**caractérisé par** :
l'envoi (520) par l'intermédiaire de la ressource RF d'une indication du réseau de données médicales avec le niveau de classement à un autre dispositif connecté qui ne fait pas partie du réseau de données médicales de sorte que l'autre dispositif connecté n'envoie pas de données à un dispositif quelconque dans le réseau de données médicales pendant que le réseau de données médicales est établi en réponse à la détermination que le niveau de classement indique qu'un ajournement vers le réseau de données médicales est requis.

13. Un système, comprenant :
un premier dispositif (1201),
un deuxième dispositif (1203), et
un troisième dispositif (1205),
où le premier dispositif (1201) comprend :
un moyen de détermination (1204) d'un niveau de classement associé à un déclencheur de réseau de données médicales reçu, et
un moyen d'interrogation (1206) du deuxième dispositif à propos des capacités du deuxième dispositif en réponse à la détermination du niveau de classement,
où le deuxième dispositif (1203) comprend un moyen d'envoi (1212) d'une indication des capacités du deuxième dispositif au premier dispositif en réponse à l'interrogation,
où le premier dispositif (1201) comprend en outre :
un moyen de détermination d'une capacité de satisfaire une exigence du niveau de classement déterminé d'interfaces hertziennes disponibles avec le deuxième dispositif en réponse à la réception de l'indication des capacités du deuxième dispositif,
un moyen de sélection (1222) d'au moins une interface hertzienne possédant la capacité déterminée de satisfaire l'exigence du niveau de classement déterminé à partir des interfaces hertziennes disponibles avec le deuxième dispositif, et
un moyen d'établissement de la au moins une interface hertzienne sélectionnée qui satisfait l'exigence du niveau de classement déterminé avec le deuxième dispositif de façon à établir un réseau de données médicales avec le niveau de classement,
où le deuxième dispositif (1203) comprend en outre un moyen d'établissement (1224) de la au moins une interface hertzienne sélectionnée qui satisfait l'exigence du niveau de classement déterminé avec le premier dispositif de façon à établir le réseau de données médicales avec le niveau de classement,
où le premier dispositif (1201) comprend en outre un moyen d'envoi d'une indication du réseau de données médicales avec le niveau de classement au troisième dispositif,
où the troisième dispositif (1205) comprend :
un moyen de réception de l'indication du réseau de données médicales avec le niveau de classement,
un moyen de détermination (1210) que le niveau de classement indique qu'un ajournement vers le réseau de données médicales est requis, et
un moyen de réalisation d'une action d'ajournement en réponse à la détermination que le niveau de classement indique qu'un ajournement vers le réseau de données médicales est requis, où l'action d'ajournement consiste à ne pas envoyer de données à un dispositif quelconque dans le réseau de données médicales pendant que le réseau de données médicales est établi.

14. Le système selon la Revendication 13, où le niveau de classement est un niveau de classement attribué par une autorité de réglementation de la santé.

15. Le système selon la Revendication 14, où le niveau de classement est un niveau d'une pluralité de niveaux de classement différents, chacun d'eux possédant au moins une exigence unique sélectionnée dans le groupe se composant d'une exigence de bande passante, d'une exigence de redondance de paquets, d'une exigence de qualité de service, d'une exigence de temps de latence, d'une exigence de sécurité et d'une exigence de redondance de liaison.
